# FASCICULE DE BREVET EUROPEEN

(11) **EP 4 143 428 B1**
(45) Date de publication et mention de la délivrance du brevet: **07.05.2025**
(21) Numéro de dépôt: 21715305.5
(22) Date de dépôt: 09.03.2021
(51) Int. Cl.: F02M 29/02, F02M 15/02, F02M 31/00, G01F 3/00, F02M 29/04, B01F 23/21, B01F 25/313, B01F 27/81, B01F 27/86, F02M 71/00, F02B 19/10, G01F 1/78

(54) **MOTEUR THERMIQUE COMPORTANT UN MÉLANGEUR À RECIRCULATION FORCÉE**
VERBRENNUNGSMOTOR MIT EINEM MISCHER MIT ZWANGSRÜCKFÜHRUNG
COMBUSTION ENGINE COMPRISING A FORCED RECIRCULATION MIXER

(30) Priorité: 29.04.2020 FR 2004269
(43) Date de publication de la demande: 08.03.2023
(73) Titulaire: Rabhi, Vianney, 69006 Lyon (FR)
(72) Inventeur: Rabhi, Vianney, 69006 Lyon (FR)
(74) Mandataire: Vuillermoz, Bruno
(86) Numéro de dépôt international: PCT/FR2021/000021
(87) Numéro de publication internationale: WO 2021/219943

(56) Documents cités:
- CH-A2- 705 094
- DE-A1- 10 343 380
- DE-C- 481 758
- FR-A1- 2 763 639
- US-A- 1 668 601
- US-A- 3 395 899
- US-A1- 2010 196 518

## Description

La présente invention a pour objet un moteur thermique comportant un mélangeur à recirculation forcée essentiellement prévu pour mélanger au moins un liquide et au moins un gaz dans des proportions déterminées, et sur une large plage de débit massique.

Ledit mélangeur selon la présente invention est particulièrement adapté à la mise en œuvre de la préchambre d'allumage à clapet qui a fait l'objet du brevet N° FR 3 061 743 publié le 16 août 2019, ledit brevet appartenant au demandeur.

Ladite préchambre prévoit qu'une charge pilote est injectée dans une cavité de stratification par un injecteur de stratification, ladite charge étant dans la majorité des cas et particulièrement en automobile constituée d'un mélange air-essence facilement inflammable qui a préalablement été mis sous pression par des moyens de compression.

L'invention selon le brevet FR 3 061 743 est en effet particulièrement destinée au marché automobile. Or, ledit marché est très sensible au prix de revient, au poids et à l'encombrement de tout équipement, qui doivent rester les plus faibles possibles. Le marché automobile est également très exigeant en matière de robustesse, de fiabilité, de durée de vie, et de maintenance.

Certains mélangeurs sont connus pour d'autres applications comme par exemple dans US1668601A ou encore US2010/196518A1, mais ne sont pas prévus pour l'utilisation avec préchambre d'allumage.

C'est dans ce contexte que s'inscrit la préchambre d'allumage à clapet selon le brevet FR 3 061 743, ladite préchambre requérant à la fois une grande précision de dosage du mélange air-essence qui constitue la charge pilote, et une grande qualité de préparation dudit mélange qui doit être le plus homogène possible.

Or, la préparation dudit mélange s'opère à pression relativement élevée de l'ordre de quarante ou cinquante bars, cependant que le débit de l'air avec lequel doit être mélangé l'essence est très faible, ledit débit d'air pouvant varier en intensité dans un rapport de cent-cinquante, voire davantage.

En outre, il est indispensable que l'essence soit intégralement vaporisée dans l'air qui la reçoit avant d'introduire le mélange air-essence résultant dans la cavité de stratification au moyen de l'injecteur de stratification.

Il est également indispensable de prévenir toute re-condensation partielle de l'essence malgré la pression élevée à laquelle est soumis le mélange air-essence, ladite re-condensation pouvant survenir si l'homogénéité dudit mélange est insuffisante.

Car en effet, la qualité de la combustion de la charge pilote dans la cavité de stratification dépend à la fois de sa composition et notamment, du rapport air/essence du mélange à brûler, et de son homogénéité.

C'est donc prioritairement pour mettre en œuvre la préchambre d'allumage à clapet selon le brevet FR 3 061 743 que, selon un mode particulier de réalisation, le mélangeur à recirculation forcée suivant l'invention :
- offre une grande précision d'injection de l'essence dans l'air pour maîtriser précisément le rapport air/essence du mélange air-essence résultant, ceci malgré de très faibles débits massiques d'essence en jeu, et malgré une plage de débit min/max d'air et d'essence à couvrir pouvant aller de un à cent-cinquante, voire davantage ;
- garantit la vaporisation complète de l'essence dans l'air ;
- garantit une grande homogénéité du mélange air-essence, et l'absence de toute re-condensation partielle de l'essence ;
- peut fonctionner sur une plage de température étendue, compatible avec les contraintes de la motorisation automobile ;
- est insensible aux vibrations produites par un moteur thermique, lesdites vibrations n'affectant pas la précision de mesure dudit mélangeur ;
- présente une durabilité, une robustesse et une fiabilité compatibles avec l'automobile ;
- ne requiert aucune maintenance particulière ;
- est léger et compact.

Il est entendu que le mélangeur à recirculation forcée selon l'invention peut non seulement s'appliquer à la préchambre d'allumage à clapet selon le brevet FR 3 061 743, mais aussi à toute autre application, quelle qu'en soit le type ou le domaine, qui nécessite de mélanger au moins un gaz avec au moins un liquide à proportions précises et de façon homogène et ceci, quel que soit ledit gaz ou ledit liquide.

Le mélangeur à recirculation forcée suivant la présente invention est prévu pour mélanger au moins un liquide vaporisable avec au moins un gaz à mélanger de sorte à former un mélange gazeux homogène, ledit mélangeur comprenant :
- Au moins une enceinte de brassage dont la cavité interne forme une boucle de recirculation dans laquelle le mélange gazeux homogène peut continuellement circuler, le début et la fin de la boucle de recirculation étant confondus ;
- Au moins un conduit d'admission de gaz qui débouche directement ou indirectement dans l'enceinte de brassage et par lequel est introduit le gaz à mélanger dans la boucle de recirculation par des moyens d'introduction de gaz en quantité connue ;
- Au moins une buse d'injection de liquide qui débouche directement ou indirectement dans l'enceinte de brassage pour introduire le liquide vaporisable dans la boucle de recirculation, ladite buse étant alimentée par des moyens d'introduction de liquide en quantité contrôlée dont le débit de liquide vaporisable est piloté par un calculateur, ledit liquide vaporisable formant, avec le gaz à mélanger, le mélange gazeux homogène ;
- Au moins un conduit de soutirage de mélange qui débouche directement ou indirectement dans l'enceinte de brassage et par lequel peut être soutiré le mélange gazeux homogène de la boucle de recirculation par des moyens de soutirage de gaz ;
- Au moins une turbine de brassage qui est mise en mouvement par un moteur de turbine et qui est positionnée dans la boucle de recirculation, ladite turbine forçant le mélange gazeux homogène à circuler dans ladite boucle.

Le mélangeur à recirculation forcée suivant la présente invention comprend au moins un conduit coaxial externe dont chaque extrémité est fermée par une terminaison de rebroussement cependant qu'au moins un conduit coaxial interne est logé dans le conduit coaxial externe et qu'un espace est laissé au mélange gazeux homogène pour circuler d'une part, entre chaque terminaison de rebroussement et le conduit coaxial interne et d'autre part, entre la face interne du conduit coaxial externe et la face externe du conduit coaxial interne, le sens de circulation du mélange gazeux homogène dans le conduit coaxial externe étant contraire au sens de circulation dudit mélange dans le conduit coaxial interne.

Le mélangeur à recirculation forcée suivant la présente invention comprend une turbine de brassage qui est en tout ou partie logée dans l'une des terminaisons de rebroussement, le mélange gazeux homogène étant aspiré par le centre de ladite turbine via le conduit coaxial interne avant d'être refoulé en périphérie de ladite turbine via l'espace laissé entre la face interne du conduit coaxial externe et la face externe du conduit coaxial interne.

Le mélangeur à recirculation forcée suivant la présente invention comprend une terminaison de rebroussement qui héberge la turbine de brassage qui présente une forme hémi-toroïdale en creux tandis que des pales que comprend la turbine de brassage ont une forme complémentaire hémi-toroïdale en saillie, un jeu faible étant laissé entre ladite terminaison et lesdites pales.

Le mélangeur à recirculation forcée suivant la présente invention comprend un conduit d'admission de gaz qui traverse l'une des terminaisons de rebroussement pour déboucher dans le conduit coaxial interne.

Le mélangeur à recirculation forcée suivant la présente invention comprend une terminaison de rebroussement traversée par le conduit d'admission de gaz qui présente une forme hémi-toroïdale en creux de laquelle émerge ledit conduit.

Le mélangeur à recirculation forcée suivant la présente invention comprend une buse d'injection de liquide qui débouche à l'intérieur du conduit d'admission de gaz, ou en sortie de ce dernier.

Le mélangeur à recirculation forcée suivant la présente invention comprend un conduit coaxial interne qui est maintenu en position dans le conduit coaxial externe par au moins une aube de brassage qui relie radialement ledit conduit coaxial interne audit conduit coaxial externe.

Le mélangeur à recirculation forcée suivant la présente invention comprend un conduit coaxial externe ou l'une quelconque de ses terminaisons de rebroussement qui est en tout on partie enveloppé d'un anneau de soutirage, l'intérieur de ce dernier étant relié à l'intérieur du conduit coaxial externe par au moins un orifice radial de soutirage, le conduit de soutirage de mélange étant relié à l'enceinte de brassage par l'intermédiaire dudit anneau et dudit orifice.

Le mélangeur à recirculation forcée suivant la présente invention comprend une enceinte de brassage qui comprend des moyens de réchauffage ou refroidissement.

Le mélangeur à recirculation forcée suivant la présente invention comprend un moteur de turbine qui est un moteur électrique qui comprend d'une part, un rotor qui est solidaire en rotation de la turbine de brassage et qui est enfermé dans l'enceinte de brassage, et d'autre part, un stator qui est placé à l'extérieur de ladite enceinte, des champs magnétiques produits par ledit stator pouvant passer au travers de la paroi de l'enceinte de brassage pour mettre le rotor en rotation.

Le mélangeur à recirculation forcée suivant la présente invention comprend des moyens d'introduction de liquide en quantité contrôlée qui sont constitués d'une pompe de liquide à piston qui comprend un carter de pompe, ladite pompe comprenant aussi au moins un piston de pompe à simple ou double effet qui, sous l'action d'un actionneur de piston coopérant avec des moyens de contrôle de déplacement, peut se déplacer en translation dans un cylindre de pompe pour former au moins une chambre de pompe de volume variable dans laquelle peut être introduit le liquide vaporisable via un clapet d'admission, et de laquelle peut être expulsé ledit liquide vers la buse d'injection de liquide via un clapet de refoulement.

Le mélangeur à recirculation forcée suivant la présente invention comprend un actionneur de piston qui est constitué d'un moteur électrique rotatif d'actionneur solidaire du carter de pompe, ledit moteur pouvant indifféremment tourner dans un sens ou dans l'autre pour entraîner en rotation des moyens de transmission menants qui sont solidaires en translation du carter de pompe et qui coopèrent avec des moyens de transmission menés qui sont solidaires en translation du piston de pompe, lesdits moyens de transmission menants réagissant avec ledit carter pour déplacer en translation longitudinale lesdits moyens de transmission menés.

Le mélangeur à recirculation forcée suivant la présente invention comprend des moyens de transmission menants qui sont formés d'une vis sans fin qui entraine en rotation une roue de vis sans fin qui présente un filetage de roue, tandis que les moyens de transmission menés sont constitués d'un filetage de piston qui coopère avec le filetage de roue.

Le mélangeur à recirculation forcée suivant la présente invention comprend un débitmètre massique de gaz qui mesure, directement ou indirectement, le débit massique du gaz à mélanger qui circule dans le conduit d'admission de gaz et/ou le débit massique du mélange gazeux homogène qui circule dans le conduit de soutirage de mélange.

Le mélangeur à recirculation forcée suivant la présente invention comprend des moyens d'introduction de liquide en quantité contrôlée qui sont constitués d'une pompe impulsionnelle qui comprend un piston de pompe impulsionnelle à simple ou double effet qui, sous l'action d'un actionneur à solénoïde de pompe, peut se déplacer en translation dans un cylindre de pompe impulsionnelle avec lequel **il** forme au moins une chambre de pompe impulsionnelle de volume variable dans laquelle peut être introduit le liquide vaporisable via un clapet d'admission de pompe impulsionnelle, et de laquelle peut être expulsé ledit liquide vers la buse d'injection de liquide via un clapet de refoulement de pompe impulsionnelle.

Le mélangeur à recirculation forcée suivant la présente invention comprend un débit volumique et/ou massique de liquide vaporisable qui est retourné au calculateur par un débitmètre de liquide vaporisable placé en amont ou en aval des moyens d'introduction de liquide en quantité contrôlée.

Le mélangeur à recirculation forcée suivant la présente invention comprend un débitmètre de liquide vaporisable qui est constitué d'un piston de débitmètre qui peut se déplacer de façon étanche dans un cylindre de débitmètre de sorte à former d'une part, une chambre amont de débitmètre qui est directement ou indirectement reliée à une source de pression, et d'autre part, une chambre aval de débitmètre qui est directement ou indirectement reliée à la buse d'injection de liquide, la position dudit piston dans ledit cylindre étant transmise au calculateur par un capteur de position cependant qu'un ressort de rappel de piston de débitmètre tend à repousser le piston de débitmètre en direction de la chambre amont de débitmètre.

Le mélangeur à recirculation forcée suivant la présente invention comprend une chambre amont de débitmètre qui peut être mise en relation avec la chambre aval de débitmètre par une vanne de rappel de piston de débitmètre.

Le mélangeur à recirculation forcée suivant la présente invention comprend une vanne de rappel de piston de débitmètre qui comprend une plaque d'étanchéité orientable qui peut être maintenue plaquée sur un orifice de vanne par un actionneur à solénoïde de vanne.

Le mélangeur à recirculation forcée suivant la présente invention comprend un accumulateur de buse qui s'interpose entre les moyens d'introduction de liquide en quantité contrôlée et la buse d'injection de liquide.

Le mélangeur à recirculation forcée suivant la présente invention comprend un accumulateur de buse qui comprend un piston d'accumulateur de buse qui forme, avec un cylindre d'accumulateur, une chambre d'accumulateur, ledit piston étant poussé en direction de ladite chambre par un ressort d'accumulateur cependant que la buse d'injection de liquide est solidaire dudit piston et traverse ce dernier de part en part dans le sens de sa longueur.

La description qui va suivre en regard des dessins annexés et donnés à titre d'exemples non limitatifs permettra de mieux comprendre l'invention, les caractéristiques qu'elle présente, et les avantages qu'elle est susceptible de procurer :

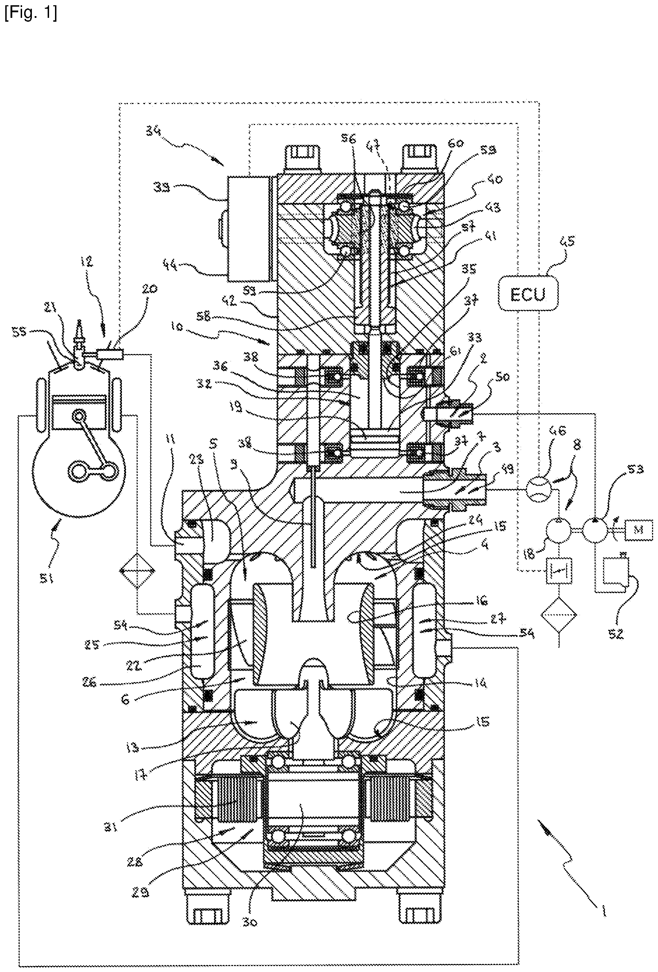

[Fig. 1] est une vue en coupe schématique du mélangeur à recirculation forcée suivant l'invention dont l'enceinte de brassage comprend un conduit coaxial externe, un conduit coaxial interne, et des moyens de réchauffage ou refroidissement, cependant que les moyens d'introduction de liquide en quantité contrôlée sont constitués d'une pompe de liquide à piston dont le piston de pompe à double effet se déplace dans un cylindre de pompe sous l'action d'une vis sans fin entrainée en rotation par un moteur électrique rotatif d'actionneur, d'une roue de vis sans fin, d'un filetage de roue et d'un filetage de piston.

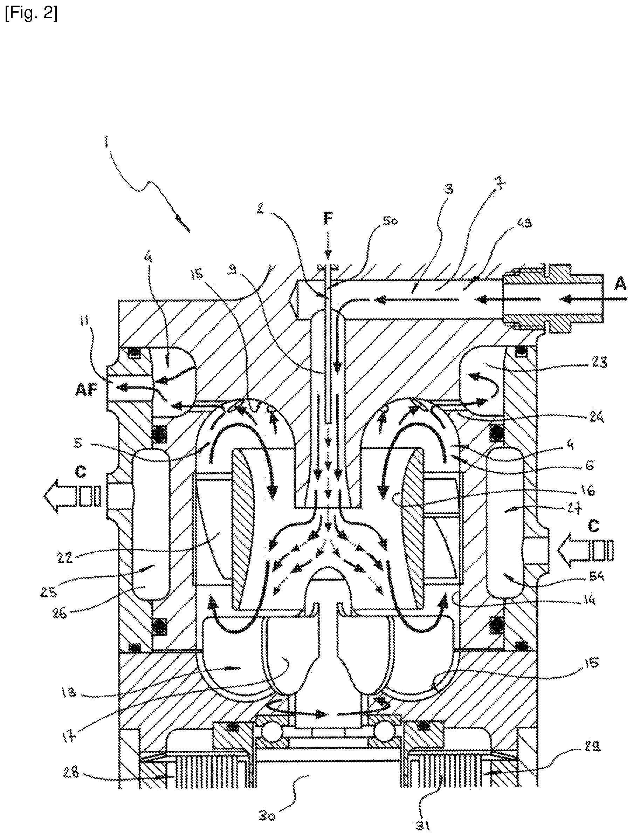

[Fig. 2] est une vue en coupe schématique rapprochée du mélangeur à recirculation forcée suivant l'invention et selon la variante illustrée en figure 1, des flèches permettant de visualiser les écoulements de gaz à mélanger, de liquide vaporisable, et de mélange gazeux homogène.

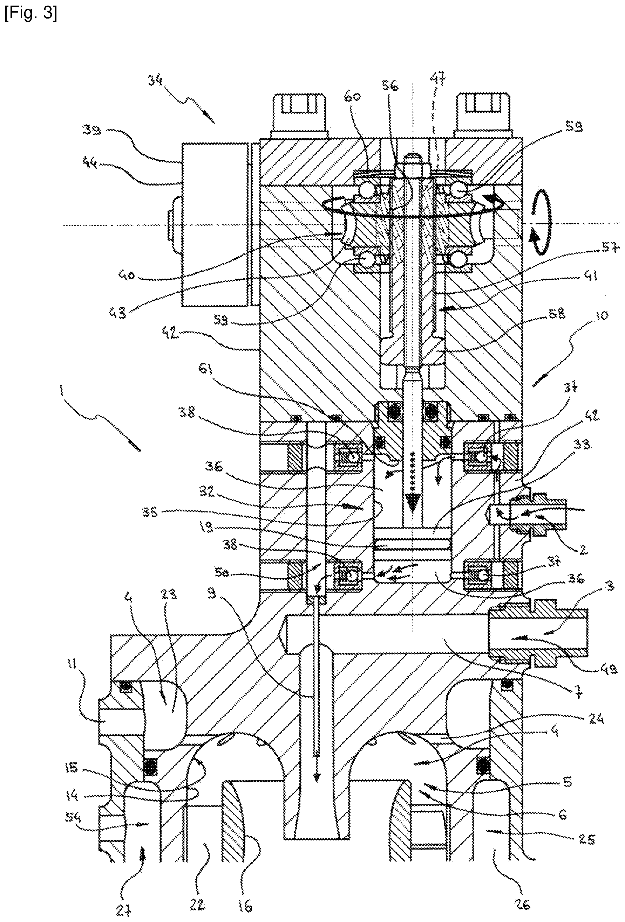

[Fig. 3] est une vue en coupe schématique rapprochée du mélangeur à recirculation forcée suivant l'invention et selon la variante illustrée en figure 1, cadrée sur la pompe de liquide à piston, et qui illustre le fonctionnement de ladite pompe lorsque le moteur électrique rotatif d'actionneur tourne la vis sans fin dans le sens des aiguilles d'une montre.

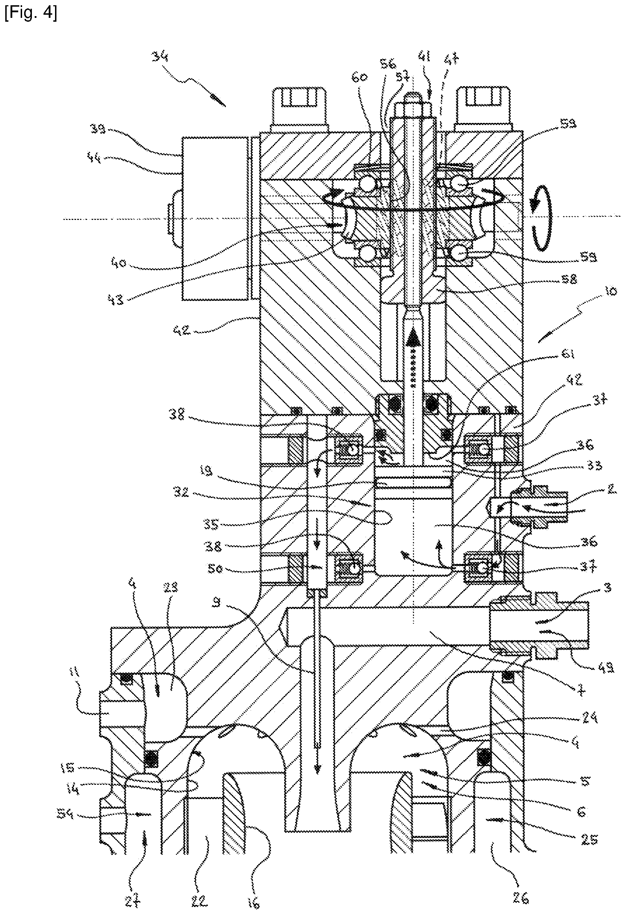

[Fig. 4] est une vue en coupe schématique rapprochée du mélangeur à recirculation forcée suivant l'invention et selon la variante illustrée en figure 1, cadrée sur la pompe de liquide à piston, et qui illustre le fonctionnement de ladite pompe lorsque le moteur électrique rotatif d'actionneur tourne la vis sans fin dans le sens inverse des aiguilles d'une montre.

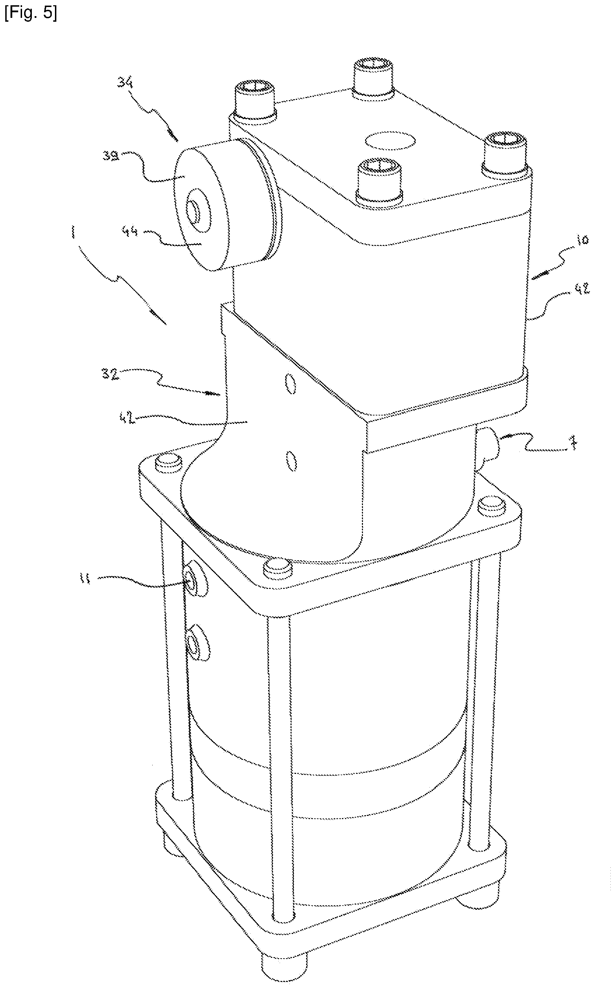

[Fig. 5] est une vue tridimensionnelle du mélangeur à recirculation forcée suivant l'invention et selon la variante illustrée en figure 1.

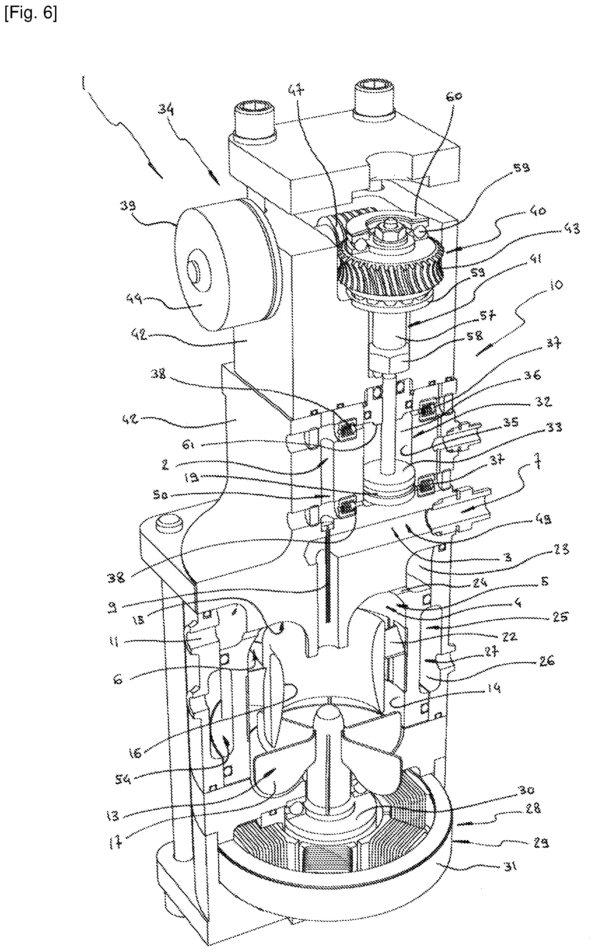

[Fig. 6] est une vue tridimensionnelle en coupe du mélangeur à recirculation forcée suivant l'invention et selon la variante illustrée en figure 1, le couvercle supérieur de la pompe de liquide à piston étant légèrement relevé pour laisser entrevoir la vis sans fin entrainée en rotation par le moteur électrique rotatif d'actionneur.

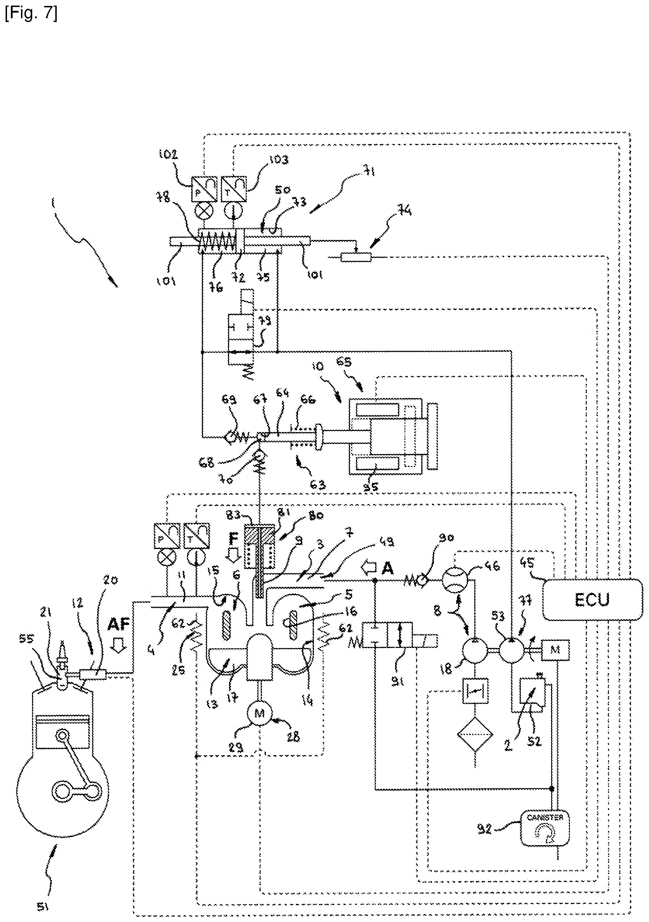

[Fig. 7] est un schéma de principe du mélangeur à recirculation forcée suivant l'invention tel qu'il peut être appliqué à un moteur thermique qui reçoit la préchambre d'allumage à clapet objet du brevet N° FR 3 061 743, les moyens d'introduction de liquide en quantité contrôlée dudit du mélangeur étant constitués d'une pompe impulsionnelle qui coopère avec un débitmètre de liquide vaporisable notamment constitué d'un piston de débitmètre dont la position est transmise au calculateur par un capteur de position.

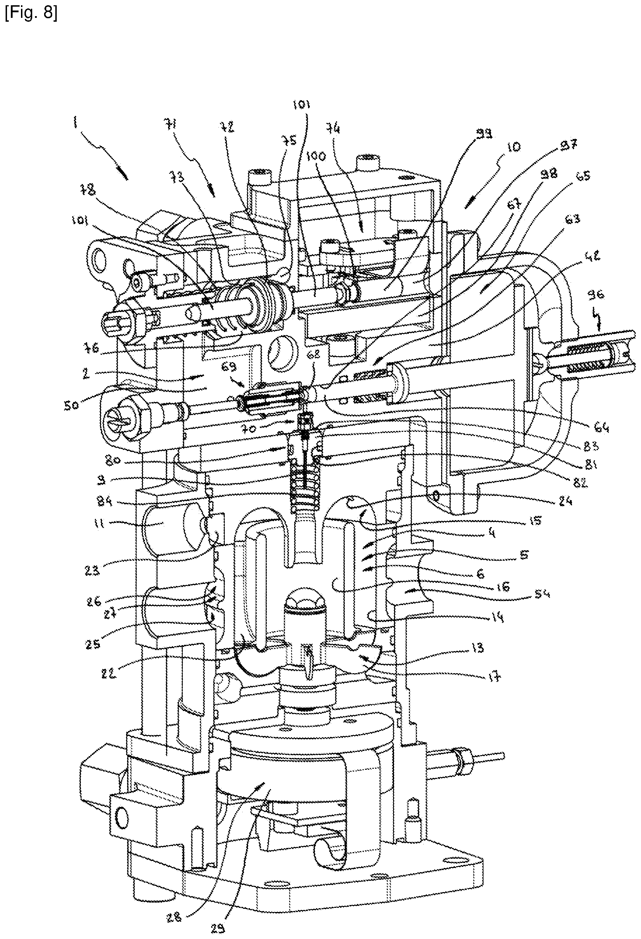

[Fig. 8] est une vue tridimensionnelle en coupe du mélangeur à recirculation forcée suivant l'invention dont les moyens d'introduction de liquide en quantité contrôlée sont constitués d'une pompe impulsionnelle qui coopère avec un débitmètre de liquide vaporisable notamment constitué d'un piston de débitmètre dont la position est mesurée par un capteur de position.

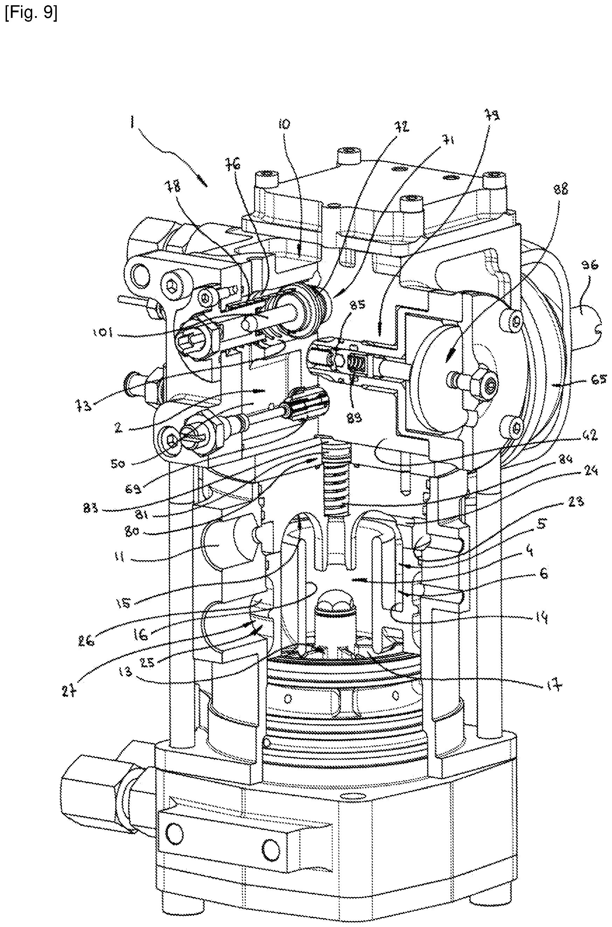

[Fig. 9] est une vue tridimensionnelle en coupe du mélangeur à recirculation forcée suivant l'invention et selon la variante illustrée en figure 8, ladite coupe montrant notamment une vanne de rappel de piston de débitmètre normalement ouverte qui peut mettre la chambre amont de débitmètre en relation avec la chambre aval de débitmètre.

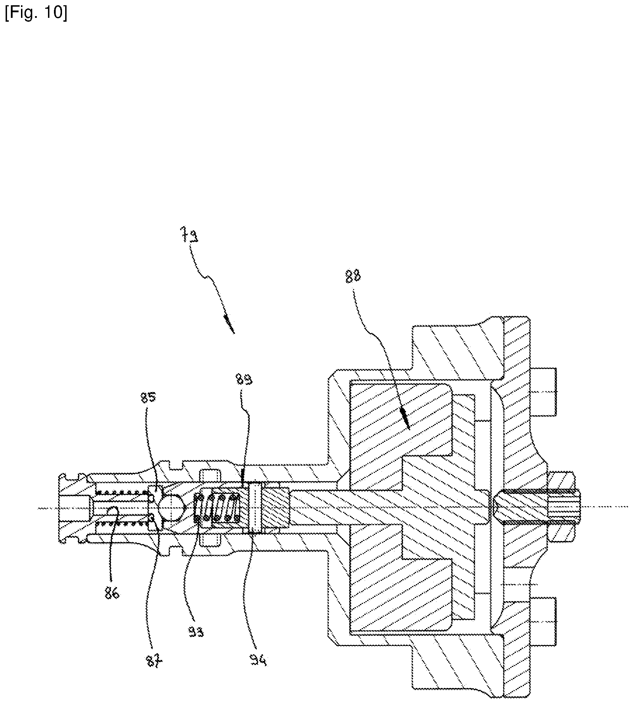

[Fig. 10] est une vue en coupe schématique de la vanne de rappel de piston de débitmètre du mélangeur à recirculation forcée suivant l'invention montrée en figure 9, ladite vanne comprenant une plaque d'étanchéité orientable maintenue plaquée par un actionneur à solénoïde de vanne sur un orifice de vanne par l'intermédiaire d'un joint d'étanchéité de vanne, ledit actionneur poussant sur ladite plaque par l'intermédiaire d'une liaison élastique notamment formée d'un ressort de maintien en fermeture et d'une goupille de butée.

### DESCRIPTION DE L'INVENTION :

On a montré en figures 1 à 6 le mélangeur à recirculation forcée 1 suivant l'invention, divers détails de ses composants, ses variantes, et ses accessoires.

Comme le montre clairement la figure 2, le mélangeur à recirculation forcée 1 est prévu pour mélanger au moins un liquide vaporisable 2 avec au moins un gaz à mélanger 3 de sorte à former un mélange gazeux homogène 4.

On voit en figures 1 à 4 et en figure 6 que le mélangeur à recirculation forcée 1 suivant l'invention comprend au moins une enceinte de brassage 5 dont la cavité interne forme une boucle de recirculation 6 dans laquelle le mélange gazeux homogène 4 peut continuellement circuler, le début et la fin de la boucle de recirculation 6 étant confondus.

Les figures 1 à 4 et la figure 6 montrent en outre que le mélangeur à recirculation forcée 1 comprend au moins un conduit d'admission de gaz 7 qui débouche directement ou indirectement dans l'enceinte de brassage 5, et par lequel est introduit le gaz à mélanger 3 dans la boucle de recirculation 6 par des moyens d'introduction de gaz en quantité connue 8 qui peuvent par exemple être constitués d'un compresseur 18 ou d'un réservoir de gaz sous pression associé à un débitmètre massique de gaz 46 comme le montre la figure 1, ces appareils 18, 46 étant connus de l'homme de l'art.

On remarque en figures 1 à 4 et en figure 6 que le mélangeur à recirculation forcée 1 suivant l'invention comprend aussi au moins une buse d'injection de liquide 9 qui débouche directement ou indirectement dans l'enceinte de brassage 5 pour introduire le liquide vaporisable 2 dans la boucle de recirculation 6, ladite buse 9 étant alimentée par des moyens d'introduction de liquide en quantité contrôlée 10 dont le débit de liquide vaporisable 2 est piloté par un calculateur 45, ledit liquide vaporisable 2 formant, avec le gaz à mélanger 3, le mélange gazeux homogène 4

On note que la buse d'injection de liquide 9 peut faire partie intégrante des moyens d'introduction de liquide en quantité contrôlée 10, ces derniers pouvant par exemple être constitués d'un injecteur à commande électromagnétique, piézoélectrique ou électro hydraulique connu en soi, ou encore d'un injecteur pompe dont le piston ou la membrane de pompe est actionné par un solénoïde ou une pile piézoélectrique et dont la quantité injectée de liquide vaporisable 2 par unité de temps est raisonnablement maîtrisable.

En figures 1 à 6 on a également montré que le mélangeur à recirculation forcée 1 suivant l'invention comprend au moins un conduit de soutirage de mélange 11 qui débouche directement ou indirectement dans l'enceinte de brassage 5 et par lequel peut être soutiré le mélange gazeux homogène 4 de la boucle de recirculation 6 par des moyens de soutirage de gaz 12 qui peuvent être par exemple constitués d'un injecteur de stratification 20 alimentant en charge pilote 55 une préchambre d'allumage à clapet 21 telle que décrite dans le brevet FR 3 061 743 appartenant au demandeur.

Comme illustré en figures 1, 2 et 6, le mélangeur à recirculation forcée 1 suivant l'invention comprend au moins une turbine de brassage 13 qui est mise en mouvement par un moteur de turbine 28 et qui est positionnée dans la boucle de recirculation 6, ladite turbine 13 forçant le mélange gazeux homogène 4 à circuler dans ladite boucle 6.

On note que, comme montré en figures 1, 2 et 6, le moteur de turbine 28 peut être un moteur électrique 29. A titre de variante, ledit moteur 28 peut être pneumatique, hydraulique, thermique ou de quelque type que ce soit connu de l'homme de l'art, que ledit moteur 28 soit directement relié à la turbine de brassage 13 pour la mettre en mouvement, ou indirectement relié à ladite turbine 13 par quelque type de transmission que ce soit.

Comme l'illustrent les figures 1, 2 et 6, l'enceinte de brassage 5 peut comprendre au moins un conduit coaxial externe 14 dont chaque extrémité est fermée par une terminaison de rebroussement 15 cependant qu'au moins un conduit coaxial interne 16 est logé dans le conduit coaxial externe 14 et qu'un espace est laissé au mélange gazeux homogène 4 pour circuler d'une part, entre chaque terminaison de rebroussement 15 et le conduit coaxial interne 16 et d'autre part, entre la face interne du conduit coaxial externe 14 et la face externe du conduit coaxial interne 16, le sens de circulation du mélange gazeux homogène 4 dans le conduit coaxial externe 14 étant contraire au sens de circulation dudit mélange 4 dans le conduit coaxial interne 16.

On remarque aussi en figures 1, 2 et 6 que la turbine de brassage 13 peut être en tout ou partie logée dans l'une des terminaisons de rebroussement 15, le mélange gazeux homogène 4 étant en ce cas aspiré par le centre de ladite turbine 13 via le conduit coaxial interne 16 avant d'être refoulé en périphérie de ladite turbine 13 via l'espace laissé entre la face interne du conduit coaxial externe 14 et la face externe du conduit coaxial interne 16.

Les figures 1, 2 et 6 montrent également que la terminaison de rebroussement 15 qui héberge la turbine de brassage 13 peut présenter une forme hémi-toroïdale en creux tandis que des pales 17 que comprend la turbine de brassage 13 ont une forme complémentaire hémi-toroïdale en saillie, un jeu faible étant laissé entre ladite terminaison 15 et lesdites pales 17.

A titre de variante de réalisation du mélangeur à recirculation forcée 1 suivant l'invention montrée en figures 1 à 4 et en figure 6, le conduit d'admission de gaz 7 peut traverser l'une des terminaisons de rebroussement 15 pour déboucher dans le conduit coaxial interne 16.

En ce cas, la terminaison de rebroussement 15 traversée par le conduit d'admission de gaz 7 peut présenter une forme hémi-toroïdale en creux de laquelle émerge ledit conduit 7.

En figures 1 à 4 et en figure 6, on notera qu'avantageusement la buse d'injection de liquide 9 peut déboucher à l'intérieur du conduit d'admission de gaz 7, ou en sortie de ce dernier. On note d'ailleurs sur lesdites figures que pour favoriser la vaporisation du liquide vaporisable 2, le conduit d'admission de gaz 7 et/ou le conduit coaxial interne 16 peut prendre la forme d'un tube de Venturi.

Comme le montrent les figures 1 à 4 et la figure 6, le conduit coaxial interne 16 peut être maintenu fixement en position dans le conduit coaxial externe 14 par au moins une aube de brassage 22 qui relie radialement ledit conduit coaxial interne 16 audit conduit coaxial externe 14.

On note aussi que, comme montré en figures 1 à 4 et en figure 6, l'aube de brassage 22 peut avantageusement être conçue pour créer des turbulences et des différences de vitesse ou d'avancement dans le flux de mélange gazeux homogène 4, de sorte à favoriser l'homogénéité de ce dernier.

Les figures 1 à 4 et la figure 6 illustrent que selon un mode particulier de réalisation du mélangeur à recirculation forcée 1 suivant l'invention, le conduit coaxial externe 14 ou l'une quelconque de ses terminaisons de rebroussement 15 peut être en tout on partie enveloppé d'un anneau de soutirage 23, l'intérieur de ce dernier étant relié à l'intérieur du conduit coaxial externe 14 par au moins un orifice radial de soutirage 24, le conduit de soutirage de mélange 11 étant relié à l'enceinte de brassage 5 par l'intermédiaire dudit anneau 23 et dudit orifice 24.

Comme on peut le remarquer en figures 1 à 4 et en figure 6, la forme et/ou la position de l'orifice radial de soutirage 24 peut être prévue pour perturber le moins possible l'écoulement du gaz à mélanger 3 dans le conduit coaxial externe 14. A ce titre, l'orifice radial de soutirage 24 peut par exemple former un écope qui débouche dans l'anneau de soutirage 23, la sortie de ladite écope obligeant le gaz à mélanger 3 soutiré à faire demi-tour lors de son passage dans ledit orifice 24.

En figures 1 à 4 et en figure 6, on a également montré que l'enceinte de brassage 5 peut comprendre des moyens de réchauffage ou refroidissement 25 qui peuvent être par exemple constitués d'une chambre de régulation thermique 26 telle que montrée sur lesdites figures, ladite chambre de régulation 26 entourant tout ou partie de ladite enceinte 5 cependant que circule un liquide ou un gaz caloporteur ou frigorigène 27 dans ladite chambre 26.

A titre d'alternative montrée en figure 7, les moyens de réchauffage ou refroidissement 25 peuvent être constitués d'au moins une résistance électrique de chauffage 62, ou de tout autre moyen connu de l'homme de l'art permettant d'apporter ou de soustraire de la chaleur à l'enceinte de brassage 5.

On a montré en figures 1, 2 et 6 que le moteur de turbine 28 peut être un moteur électrique 29 qui comprend d'une part, un rotor 30 qui est solidaire en rotation de la turbine de brassage 13 et qui est enfermé dans l'enceinte de brassage 5, et d'autre part, un stator 31 qui est placé à l'extérieur de ladite enceinte 5, des champs magnétiques produits par ledit stator 31 pouvant passer au travers de la paroi de l'enceinte de brassage 5 pour mettre le rotor 30 en rotation.

On note que selon cette configuration particulière du mélangeur à recirculation forcée 1 selon l'invention, la paroi de l'enceinte de brassage 5 peut avantageusement être réalisée en matériau amagnétique tel que l'inox, l'aluminium, ou le laiton.

On voit en figure 1 et en figures 3 à 6 que les moyens d'introduction de liquide en quantité contrôlée 10 peuvent être constitués d'une pompe de liquide à piston 32 qui comprend un carter de pompe 42, ladite pompe 32 comprenant aussi au moins un piston de pompe 33 à simple ou double effet qui, sous l'action d'un actionneur de piston 34 coopérant avec des moyens de contrôle de déplacement 44, peut se déplacer en translation dans un cylindre de pompe 35 pour former au moins une chambre de pompe 36 de volume variable dans laquelle peut être introduit le liquide vaporisable 2 via un clapet d'admission 37, et de laquelle peut être expulsé ledit liquide 2 vers la buse d'injection de liquide 9 via un clapet de refoulement 38.

On notera que les moyens de contrôle de déplacement 44 peuvent par exemple être constitués d'un codeur angulaire ou linéaire, optique ou à « effet Hall », absolu ou incrémental, ou être constitués du pilotage pas-à-pas d'un ou plusieurs moteurs électriques linéaires ou rotatifs, lesdits moyens de contrôle 44 permettant dans tous les cas à un calculateur 45 de piloter la position et la vitesse d'avancement du piston de pompe 33 dans le cylindre de pompe 35 et donc, de contrôler la quantité de liquide vaporisable 2 introduite dans la boucle de recirculation 6 par unité de temps.

On notera également que le piston de pompe 33 peut comporter un joint d'étanchéité de piston 19 réalisé par exemple en élastomère, ledit joint 19 pouvant être simple, ou composite et constitué d'un joint torique qui coopère avec une bague faite de PTFE chargé de particules anti-abrasives et/ou antifriction.

On remarquera en figure 1 et en figures 3 à 6 que l'actionneur de piston 34 peut être constitué d'un moteur électrique rotatif d'actionneur 39 solidaire du carter de pompe 42, ledit moteur 39 pouvant indifféremment tourner dans un sens ou dans l'autre pour entraîner en rotation des moyens de transmission menants 40 qui sont solidaires en translation du carter de pompe 42 et qui coopèrent avec des moyens de transmission menés 41 qui sont solidaires en translation du piston de pompe 33, lesdits moyens de transmission menants 40 réagissant avec ledit carter 42 pour déplacer en translation longitudinale lesdits moyens de transmission menés 41.

On notera aussi que les moyens de transmission menants 40 peuvent être par exemple constitués d'une roue qui est taraudée en son centre et qui est reliée au moteur électrique rotatif d'actionneur 39 par l'intermédiaire d'un réducteur formé d'une cascade de pignons, d'un train épicycloïdal, d'une succession de poulies crantées et de courroies crantées, ou de tout autre type de réducteur connu de l'homme de l'art, ladite roue coopérant avec une tige filetée qui est solidaire en translation du piston de pompe 33 et qui forme les moyens de transmission menés 41.

On notera également que les moyens de transmission menants 40 et les moyens de transmission menés 41 peuvent être remplacés par tout autre mécanisme produisant un effet équivalent ou similaire tel qu'un dispositif d'engrenage à pignon et crémaillère, ou un dispositif à poulie et câble.

Comme le montrent les figures 1, 3, 4 et 6 et selon un mode particulier de réalisation du mélangeur à recirculation forcée 1 suivant l'invention, les moyens de transmission menants 40 peuvent être formés d'une vis sans fin 47 qui entraine en rotation une roue de vis sans fin 43 qui présente un filetage de roue 56, tandis que les moyens de transmission menés 41 peuvent être constitués d'un filetage de piston 57 qui coopère avec le filetage de roue 56.

Comme illustré en figure 1, un débitmètre massique de gaz 46 peut mesurer, directement ou indirectement, le débit massique du gaz à mélanger 3 qui circule dans le conduit d'admission de gaz 7 et/ou le débit massique du mélange gazeux homogène 4 qui circule dans le conduit de soutirage de mélange 11, ledit débitmètre 46 permettant au calculateur 16 de déterminer le débit massique du liquide vaporisable 2 devant être introduit dans l'enceinte de brassage 5 par la buse d'injection de liquide 9 pour former dans ladite enceinte 5 un mélange gazeux homogène 4 composé de liquide vaporisable 2 et de gaz à mélanger 3 dans les proportions recherchées.

Dès lors que le débit massique du liquide vaporisable 2 devant être introduit dans l'enceinte de brassage 5 est déterminé, le calculateur 16 peut piloter les moyens d'introduction de liquide en quantité contrôlée 10 afin que ces derniers délivrent bien à la buse d'injection de liquide 9 le débit massique de liquide vaporisable 2 nécessaire à la formation du mélange gazeux homogène 4 recherché dans l'enceinte de brassage 5.

Les figures 7 à 9 montrent que les moyens d'introduction de liquide en quantité contrôlée 10 peuvent être constitués d'une pompe impulsionnelle 63 qui comprend un piston de pompe impulsionnelle 64 à simple ou double effet qui, sous l'action d'un actionneur à solénoïde de pompe 65, peut se déplacer en translation dans un cylindre de pompe impulsionnelle 67.

En ce cas, le piston de pompe impulsionnelle 64 peut former avec le cylindre de pompe impulsionnelle 67 au moins une chambre de pompe impulsionnelle 68 de volume variable dans laquelle peut être introduit le liquide vaporisable 2 via un clapet d'admission de pompe impulsionnelle 69, et de laquelle peut être expulsé ledit liquide 2 vers la buse d'injection de liquide 9 via un clapet de refoulement de pompe impulsionnelle 70.

En figures 7 à 9, on a également montré que le débit volumique et/ou massique de liquide vaporisable 2 peut être retourné au calculateur 45 par un débitmètre de liquide vaporisable 71 placé en amont ou en aval des moyens d'introduction de liquide en quantité contrôlée 10.

Selon cette configuration particulière du mélangeur à recirculation forcée 1 suivant l'invention, le débitmètre de liquide vaporisable 71 peut être constitué d'un piston de débitmètre 72 qui peut se déplacer de façon étanche dans un cylindre de débitmètre 73 de sorte à former une chambre amont de débitmètre 75 qui est directement ou indirectement reliée à une source de pression 77 cette dernière pouvant être constituée de la pompe à essence 53 d'un moteur thermique 51 qui en parallèle alimente les injecteurs connus en soi dudit moteur 51.

En ce cas, le piston de débitmètre 72 forme également avec le cylindre de débitmètre 73 une chambre aval de débitmètre 76 qui est directement ou indirectement reliée à la buse d'injection de liquide 9.

Toujours selon cette configuration particulière du mélangeur à recirculation forcée 1 suivant l'invention, la position du piston de débitmètre 72 dans le cylindre de débitmètre 73 est transmise au calculateur 45 par un capteur de position 74 qui peut être inductif, capacitif, optique ou de quelque type que ce soit connu de l'homme de l'art, cependant qu'un ressort de rappel de piston de débitmètre 78 tend à repousser le piston de débitmètre 72 en direction de la chambre amont de débitmètre 75.

Comme on le voit clairement en figures 7 et 10, la chambre amont de débitmètre 75 peut être mise en relation avec la chambre aval de débitmètre 76 par une vanne de rappel de piston de débitmètre 72.

En ce cas, du liquide vaporisable 2 est transféré depuis la chambre amont de débitmètre 75 vers la chambre aval de débitmètre 76, ce transfert résultant de l'effort qu'exerce le ressort de rappel de piston de débitmètre 78 sur le piston de débitmètre 72 qui a pour effet de déplacer ce dernier en direction de la chambre amont de débitmètre 75.

On note que la vanne de rappel de piston de débitmètre 72 peut être de type « normalement ouverte » comme montré en figures 7, 9 et 10, ou bien de type « normalement fermée ».

La figure 10 montre un mode particulier de réalisation de la vanne de rappel de piston de débitmètre 72 du mélangeur à recirculation forcée 1 suivant l'invention selon lequel ladite vanne 72 comprend une plaque d'étanchéité orientable 85 qui peut être maintenue plaquée sur un orifice de vanne 86 par un actionneur à solénoïde de vanne 88, tandis qu'un joint d'étanchéité de vanne 87 s'interpose entre ladite plaque 85 et ledit orifice 86, et cependant que l'actionneur à solénoïde de vanne 88 pousse sur la plaque d'étanchéité orientable 85 par l'intermédiaire d'une liaison élastique 89.

A titre d'autre variante de réalisation du mélangeur à recirculation forcée 1 suivant l'invention, on a montré en figures 7 à 9 qu'un accumulateur de buse 80 peut s'interposer entre les moyens d'introduction de liquide en quantité contrôlée 10 et la buse d'injection de liquide 9 de sorte que si lesdits moyens 10 produisent de fortes variations de débit de liquide vaporisable 2, le débit effectif de dit liquide 2 éjecté par la buse d'injection de liquide 9 dans l'enceinte de brassage 5 est soumis auxdites variations sur une moindre amplitude.

En ce cas, l'accumulateur de buse 80 peut comprendre un piston d'accumulateur de buse 81 qui forme, avec un cylindre d'accumulateur 82, une chambre d'accumulateur 83, ledit piston 81 étant poussé en direction de ladite chambre 83 par un ressort d'accumulateur 84 cependant que la buse d'injection de liquide 9 est solidaire dudit piston 81 et traverse ce dernier de part en part dans le sens de sa longueur.

### FONCTIONNEMENT DE L'INVENTION :

Le fonctionnement du mélangeur à recirculation forcée 1 selon la présente invention se comprend aisément au vu des figures 1 à 6.

Pour illustrer ledit fonctionnement, supposons ici que comme le montre de façon schématique la figure 1, le mélangeur à recirculation forcée 1 serve à alimenter en mélange gazeux homogène 4 un injecteur de stratification 20 prévu pour une préchambre d'allumage à clapet 21 telle que décrite dans le brevet FR 3 061 743, ladite préchambre 21 étant appliquée à un moteur thermique 51 chargé de propulser une automobile non-représentée.

Comme on le voit en figures 1 et 7, le mélangeur à recirculation forcée 1 selon l'invention remplace avantageusement un carburateur ou injecteur qui serait placé en entrée du compresseur 18. Par rapport à une telle configuration, ledit mélangeur 1 écarte tout risque d'auto-inflammation du mélange gazeux homogène 4 dans ledit compresseur 18, et tout risque de re-condensation à l'intérieur dudit compresseur 18 du liquide vaporisable 2 qui constitue pour partie ledit mélange 4.

En outre et par rapport à un carburateur ou injecteur placé en entrée du compresseur 18, le mélangeur à recirculation forcée 1 selon l'invention prépare un mélange gazeux homogène 4 de composition plus précise, de plus grande homogénéité, et réduit potentiellement la quantité de mélange gazeux homogène 4 stockée entre l'admission du compresseur 18 et l'injecteur de stratification 20.

le mélangeur 1 selon l'invention assure également un brassage permanent du mélange gazeux homogène 4 même lorsque le moteur thermique 51 est momentanément à l'arrêt, ce qui est souhaitable par exemple dans le cadre d'applications hybrides thermique-électrique telles que trouvées en automobile.

A ce titre, le mélangeur à recirculation forcée 1 selon l'invention laisse une plus grande liberté à la définition technique du compresseur 18 qu'un carburateur ou injecteur placé en entrée dudit compresseur 18.

Il n'en reste pas moins qu'un carburateur ou injecteur reste une solution envisageable pour mettre en œuvre la préchambre d'allumage à clapet 21 sur tout moteur thermique 51, notamment si ledit moteur équipe une automobile produite en grande série.

Dans le cadre de l'application particulière du mélangeur à recirculation forcée 1 selon l'invention présentée ici, le mélange gazeux homogène 4 constitue la charge pilote 55 qu'introduit l'injecteur de stratification 20 dans la préchambre d'allumage à clapet 21 à chaque cycle du moteur thermique 51.

Selon cet exemple particulier de mise en œuvre du mélangeur à recirculation forcée 1 suivant l'invention, l'injecteur de stratification 20 et la préchambre d'allumage à clapet 21 forment donc des moyens de soutirage de gaz 12.

Nous supposerons ici que le gaz à mélanger 3 est de l'air 49 atmosphérique tandis que le liquide vaporisable 2 est de l'essence 50 telle que communément consommée par les automobiles.

Supposons également ici qu'il faille que le mélange gazeux homogène 4 qui alimente l'injecteur de stratification 20 soit composé, à titre d'exemple non-limitatif, de quatorze grammes d'air 49 par gramme d'essence 50, ledit mélange gazeux 4 étant donc légèrement riche par rapport à la stœchiométrie.

Considérons que dans le cadre de cette application particulière du mélangeur à recirculation forcée 1 selon l'invention, le débit massique de mélange gazeux homogène 4 à fournir à l'injecteur de stratification 20 quand le moteur thermique 51 tourne au ralenti est de cent cinquante fois inférieur au débit massique de dit mélange 4 à fournir audit injecteur 20 lorsque ledit moteur 51 opère à pleine puissance.

Considérons ici que quel que soit le point de fonctionnement du moteur thermique 51, la proportion massique d'air 49 et d'essence 50 dont est constitué le mélange gazeux homogène 4 ne doit pas varier.

Supposons également que le mélange gazeux homogène 4 constitué d'air 49 et d'essence 50 est fourni à l'injecteur de stratification 20 sous une pression de quarante bars.

Pour atteindre ce résultat, on remarque en figure 1 que l'air 49 est mis sous pression par le compresseur 18 qui est représenté symboliquement. Ledit compresseur 18 coopére avec un débitmètre massique de gaz 46. Ensemble, ledit compresseur 18 et ledit débitmètre 46 forment les moyens d'introduction de gaz en quantité connue 8 que comprend le mélangeur à recirculation forcée 1 selon l'invention.

A titre d'exemple non-limitatif de réalisation dudit mélangeur 1, la figure 1 et les figures 3 à 6 montrent que l'essence 50 est mise sous pression par une pompe de liquide à piston 32 qui comprend un piston de pompe 33 à double effet qui peut se déplacer en translation dans un cylindre de pompe 35 pour former deux chambres de pompe 36 de volume variable.

En figures 3 et 4, des flèches montrent que l'essence 50 est introduite dans chacune des chambres de pompe 36 via un clapet d'admission 37, ladite essence 50 étant ensuite expulsée vers la buse d'injection de liquide 9 via un clapet de refoulement 38.

Ainsi constituée, la pompe de liquide à piston 32 forme les moyens d'introduction de liquide en quantité contrôlée 10.

On note en figure 1 que l'essence 50 provient d'un réservoir d'essence 52 que comprend l'automobile propulsée par le moteur thermique 51. On remarque aussi en figure 1 que, préalablement à son introduction dans la pompe de liquide à piston 32, l'essence 50 est mise sous pression par une pompe à essence 53 chargée par ailleurs d'alimenter un système d'injection principal non-représenté que comprend ledit moteur 51.

Pour réaliser un mélange gazeux homogène 4 à proportion de quatorze grammes d'air 49 par gramme d'essence 50 sous une pression de quarante bars, il faut que l'enceinte de brassage 5 dans laquelle est réalisé ledit mélange 4 soit portée à une température d'au moins soixante-dix degrés Celsius.

Ladite température est nécessaire pour que l'intégralité de l'essence 50 qui forme le mélange gazeux homogène 4 passe à l'état de vapeur et reste dans ledit état, tenant compte de la pression de vapeur saturante de ladite essence 50 à ladite température.

C'est pour cela qu'on a prévu, comme le montrent les figures 1 à 4 et la figure 6, une chambre de régulation thermique 26 qui entoure une grande partie de l'enceinte de brassage 5. Un liquide ou un gaz caloporteur ou frigorigène 27, constitué en l'occurrence de l'eau de refroidissement 54 du moteur thermique 51, circule dans la chambre de régulation thermique 26. Ladite eau 54 qui circule dans la chambre de régulation thermique 26 à une température proche de cent degrés Celsius est symbolisée en figure 2 par la lettre « C »,

Ainsi, la chambre de régulation thermique 26 constitue des moyens de réchauffage ou refroidissement 25 qui garantissent que l'essence 50 dont est en partie formé le mélange gazeux homogène 4 reste entièrement à l'état de vapeur, ceci malgré la pression de quarante bars à laquelle est soumis ledit mélange 4.

Lorsque le moteur thermique 51 tourne au ralenti, la quantité totale de mélange gazeux homogène 4 introduite chaque seconde dans la préchambre d'allumage à clapet 21 par l'injecteur de stratification 20 est très petite. En ordre de grandeur, ladite quantité peut être de vingt-deux normo centimètres cubes d'air 49 mélangés à deux virgule cinq millimètres cubes d'essence 50.

Aussi, pour obtenir un mélange homogène d'air 49 et d'essence 50, le mélange gazeux homogène 4 est brassé dans la boucle de recirculation 6 que forme la cavité interne de l'enceinte de brassage 5.

Supposons ici que l'enceinte de brassage 5 contient soixante centimètres cubes de mélange gazeux homogène 4 soumis à une pression de quarante bars. Cette quantité de dit mélange 4 est celle que fournit chaque minute l'injecteur de stratification 20 à la préchambre d'allumage à clapet 21 sous forme de charges pilotes 55 lorsque le moteur thermique 51 fonctionne au ralenti.

Lorsque le moteur thermique 51 tourne au ralenti, le débit massique de mélange gazeux homogène 4 circulant dans la boucle de recirculation 6 est ainsi de plusieurs dizaines à plusieurs centaines de fois plus grand que le débit de dit mélange 4 soutiré à l'enceinte de brassage 5 par l'injecteur de stratification 20 pour alimenter la préchambre d'allumage à clapet 21.

L'encours de mélange gazeux homogène 4 contenu dans l'enceinte de brassage 5 et le brassage dudit mélange 4 produit par son déplacement incessant dans la boucle de recirculation 6 permet de moyenner la composition dudit mélange 4 sur une période de temps longue, et de rendre ledit mélange 4 fortement homogène.

Le brassage du mélange gazeux homogène 4 est particulièrement illustré en figure 2 où l'on voit que la boucle de recirculation 6 est formée d'un conduit coaxial externe 14 dont chaque extrémité est fermée par une terminaison de rebroussement 15 de forme hémi-toroïdale en creux, cependant qu'un conduit coaxial interne 16 est logé dans le conduit coaxial externe 14 et qu'un espace est laissé au mélange gazeux homogène 4 pour circuler d'une part, entre chaque terminaison de rebroussement 15 et le conduit coaxial interne 16 et d'autre part, entre la face interne du conduit coaxial externe 14 et la face externe du conduit coaxial interne 16.

On remarque en figure 2 que le sens de circulation du mélange gazeux homogène 4 dans le conduit coaxial externe 14 est contraire au sens de circulation dudit mélange 4 dans le conduit coaxial interne 16.

En figures 1, 2 et 6, on a montré la turbine de brassage 13 qui est en partie logée dans l'une des terminaisons de rebroussement 15, le mélange gazeux homogène 4 étant aspiré par le centre de ladite turbine 13 via le conduit coaxial interne 16 comme l'illustrent particulièrement clairement les flèches montrées en figure 2, ceci avant d'être refoulé en périphérie de ladite turbine 13 via l'espace laissé entre la face interne du conduit coaxial externe 14 et la face externe du conduit coaxial interne 16.

En figures 1, 2 et 6, on a montré qu'avantageusement et selon cette exemple de réalisation du mélangeur à recirculation forcée 1 suivant l'invention, la forme hémi-toroïdale en creux de la terminaison de rebroussement 15 qui héberge la turbine de brassage 13 est complémentaire à celle en saillie des pales 17 que comprend ladite turbine 13, un jeu faible étant laissé entre ladite terminaison 15 et lesdites pales 17.

On note en figure 1 que le moteur de turbine 28 qui entraine en rotation la turbine de brassage 13 est un moteur électrique 29 qui comprend d'une part, un rotor 30 qui est solidaire en rotation de la turbine de brassage 13 et qui est enfermé dans l'enceinte de brassage 5, et d'autre part, un stator 31 qui est placé à l'extérieur de ladite enceinte 5, des champs magnétiques tournants produits par ledit stator 31 passant au travers de la paroi de l'enceinte de brassage 5 pour mettre le rotor 30 en rotation.

Cette configuration particulière du moteur de turbine 28 évite de recourir à une étanchéité d'un arbre tournant traversant la paroi de l'enceinte de brassage 5 pour assurer l'entraînement en rotation de la turbine de brassage 13, ce qui est avantageux vu la pression relativement importante de quarante bars régnant dans ladite enceinte 5.

On remarque en figures 1 à 4 et en figure 6 que pour déboucher dans le conduit coaxial interne 16, le conduit d'admission de gaz 7 traverse la terminaison de rebroussement 15 opposée à celle qui héberge la turbine de brassage 13.

Comme on le voit clairement en figures 1, 2 et 6, le conduit coaxial interne 16 est maintenu en position dans le conduit coaxial externe 14 par des aubes de brassage 22 qui relient radialement ledit conduit coaxial interne 16 audit conduit coaxial externe 14. Avantageusement, les aubes de brassage 22 créent des turbulences et des différences de vitesse dans le flux de mélange gazeux homogène 4, et favorisent l'homogénéité de ce dernier.

Comme on le voit en figure 2, le gaz à mélanger 3, constitué ici d'air 49 symbolisé par la lettre « A », est introduit dans l'enceinte de brassage 5 par le conduit d'admission de gaz 7, tandis que la buse d'injection de liquide 9 débouche à l'intérieur dudit conduit 7 au voisinage du débouché de ce dernier dans l'enceinte de brassage 5.

La buse d'injection de liquide 9 introduit dans l'air 49 circulant dans le conduit d'admission de gaz 7 la quantité nécessaire de liquide vaporisable 2 constitué ici d'essence 50 symbolisée par la lettre « F », de sorte que soit formé un mélange gazeux homogène 4 plus ou moins homogène et contenant plus ou moins d'essence 50 à l'état liquide, ceci à proportion de quatorze grammes d'air 49 par gramme d'essence 50.

Ainsi, l'air 49 se pré-mélange avec l'essence 50 dont une part s'évapore dans le conduit d'admission de gaz 7, le mélange gazeux résultant débouchant ensuite dans l'enceinte de brassage 5.

Le pré-mélange d'air 49 et d'essence 50 ainsi constitué est ensuite entraîné en mouvement dans la boucle de recirculation 6 par le mélange gazeux homogène 4 qui y circule déjà. Ledit pré-mélange est ensuite brassé notamment par la turbine de brassage 13 et par les aubes de brassage 22, l'essence 50 qui constitue ledit pré-mélange s'évaporant entièrement pour former le mélange gazeux homogène 4 recherché.

On note que si une partie de l'essence 50 sort à l'état liquide du conduit d'admission de gaz 7, elle va immanquablement se déposer en surface des pales 17 de la turbine de brassage 13, de la face interne ou externe du conduit coaxial interne 16, de la face interne du conduit coaxial externe 14, ou en surface des aubes de brassage 22. Ensuite, la circulation forcée du mélange gazeux homogène 4 dans la boucle de recirculation 6 va sécher lesdites surfaces qui sont porteuses de ladite essence 50 à l'état liquide, de sorte que ladite essence 50 rejoigne ledit mélange gazeux 4 à l'état de vapeur.

Comme montré en figure 2, le soutirage de mélange gazeux homogène 4 constitué d'air 49 et d'essence 50 symbolisé sur ladite figure 2 par les lettres « AF » s'opère via le conduit de soutirage de mélange 11 qui débouche dans l'enceinte de brassage 5 et plus précisément, dans la boucle de recirculation 6 que forme la cavité interne de l'enceinte de brassage 5.

On remarque en figures 1 à 5 et en figure 6 que la terminaison de rebroussement 15 supérieure du conduit coaxial externe 14 est en partie enveloppée d'un anneau de soutirage 23 dont l'intérieur est relié à l'intérieur du conduit coaxial externe 14 par des orifices radiaux de soutirage 24, le conduit de soutirage de mélange 11 étant relié à l'enceinte de brassage 5 par l'intermédiaire dudit anneau 23 et des dits orifices 24.

Comme on peut le remarquer en figures 1 à 4 et en figure 6, la position et l'orientation des orifices radiaux de soutirage 24 sont prévues pour perturber le moins possible l'écoulement du mélange gazeux homogène 4 dans le conduit coaxial externe 14 et plus précisément, dans la terminaison de rebroussement 15 supérieure du conduit coaxial externe 14.

Ainsi, lorsque du mélange gazeux homogène 4 est soutiré de l'enceinte de brassage 5 par l'injecteur de stratification 20, ledit mélange 4 est parfaitement homogène, et est exclusivement constitué d'air 49 et d'essence 50 à proportion de quatorze grammes d'air 49 par gramme d'essence 50.

Obtenir avec précision une telle proportion d'air 49 et d'essence 50 nécessite de connaître le débit massique d'air 49 admis dans l'enceinte de brassage 5, pour pouvoir introduire dans ledit air 49 la bonne quantité d'essence 50 via la buse d'injection de liquide 9.

C'est pourquoi le mélangeur à recirculation forcée 1 suivant l'invention coopère, selon l'exemple de réalisation pris ici pour en illustrer le fonctionnement, avec un débitmètre massique de gaz 46 qui peut être à organe déprimogène, à tube Pitot, à ludion, à coupelle, à hélice ou à turbine, à palette, ionique, ultrasonique, électromagnétique, à effet Coriolis, à tourbillon de Karman ou à effet vortex, à fil ou film chaud, massique thermique, ou de façon générale, de tout type connu de l'homme de l'art.

Ledit débitmètre 46 retourne le débit massique effectif d'air 49 admis dans l'enceinte de brassage 5 au calculateur 45 qui est symbolisé en figure 1 par les lettres « ECU », ledit calculateur 45 pouvant piloter en conséquence la pompe de liquide à piston 32.

Comme on le voit en figures 1, 3, 4 et 6, le piston de pompe 33 à double effet de la pompe de liquide à piston 32 est ici mû en translation dans le cylindre de pompe 35 avec lequel il coopère par un moteur électrique rotatif d'actionneur 39 solidaire du carter de pompe 42.

Comme le montrent les figures 3 et 4, le moteur électrique rotatif d'actionneur 39 peut indifféremment tourner dans un sens ou dans l'autre pour entraîner en rotation des moyens de transmission menants 40 qui sont solidaires en translation du carter de pompe 42 et qui sont ici formés d'une vis sans fin 47 qui entraine en rotation une roue de vis sans fin 43 munie d'un filetage de roue 56.

Comme on le voit clairement en figures 3 et 4, le filetage de roue 56 coopère avec un filetage de piston 57 qui est solidaire du piston de pompe 33 et qui forme des moyens de transmission menés 41.

En tournant sur elle-même sous l'action de la vis sans fin 47, la roue de vis sans fin 43 visse ou dévisse le filetage de roue 56 femelle autour du filetage de piston 57 mâle, ce qui a pour effet de mouvoir le piston de pompe 33 à double effet en translation dans le cylindre de pompe 35.

La figure 3 montre que lorsque le moteur électrique rotatif d'actionneur 39 tourne la vis sans fin 47 dans le sens des aiguilles d'une montre, le piston de pompe 33 descend et expulse l'essence 50 contenue dans la chambre de pompe 36 inférieure hors de ladite chambre 36 via le clapet de refoulement 38 de cette dernière, cependant que la chambre de pompe 36 supérieure aspire de l'essence 50 via son clapet d'admission 37.

La figure 4 montre quant à elle ce qui survient lorsque le moteur électrique rotatif d'actionneur 39 tourne la vis sans fin 47 dans le sens inverse des aiguilles d'une montre. En ce cas, le piston de pompe 33 monte et expulse l'essence 50 contenue dans la chambre de pompe 36 supérieure hors de ladite chambre 36 via le clapet de refoulement 38 de cette dernière, cependant que la chambre de pompe 36 inférieure aspire de l'essence 50 via son clapet d'admission 37

On remarque en figure 6 que le filetage de piston 57 est bloqué en rotation dans le carter de pompe 42 par une tête hexagonale 58 qui coopère avec une forme d'extrusion complémentaire aménagée dans ledit carter 42.

On remarque aussi en figures 1, 3, 4 et 6 que tout en tournant autour de son axe longitudinal, la roue de vis sans fin 43 prend axialement appui dans le carter de pompe 42 par l'intermédiaire de butées à bille 59 connues en soi.

On remarque enfin en figures 1, 3, 4 et 6 que tout jeu axial entre la roue de vis sans fin 43 et le carter de pompe 42 est éliminé par un ressort de suppression du jeu axial 60 interposé, selon cet exemple, entre ledit carter 42 et la butée à bille 59 supérieure.

En figure 1 et en figures 3 à 6, on a montré le moteur électrique rotatif d'actionneur 39 qui est ici et selon cet exemple un dit moteur 39 sans balai qui intègre un codeur à « effet Hall » générant trente impulsions par tour de dit moteur 39.

On remarque, particulièrement en figures 1, 3, 4 et 6, que l'intérieur du cylindre de pompe 35 présente une butée d'initialisation 61 au contact de laquelle peut venir le piston de pompe 33 de sorte que le calculateur 45 puisse compter les impulsions générées par le codeur à « effet Hall » à partir de cette référence.

Ainsi, si la roue de vis sans fin 43 comporte trente dents, si le pas du filetage de roue 56 et du filetage de piston 57 est de un millimètre, et tenant compte des trente impulsions générées par le codeur à « effet Hall » à chaque tour du moteur électrique rotatif d'actionneur 39, une impulsion du codeur à « effet Hall » correspond à un déplacement du piston de pompe 33 d'environ un micromètre.

Comme le rapport entre le déplacement du piston de pompe 33 et la quantité d'essence 50 expulsée de la chambre de pompe 36 correspondante est connu du calculateur 45, ce dernier peut précisément piloter la rotation du moteur électrique rotatif d'actionneur 39 de sorte à générer un débit massique d'essence 50 à expulser via la buse d'injection de liquide 9 valant un quatorzième du débit massique d'air 49 retourné audit calculateur 45 par le débitmètre massique de gaz 46.

Comme on le déduit aisément de ce qui précède, le mélangeur à recirculation forcée 1 suivant l'invention permet bien de réaliser un mélange gazeux homogène 4 formé ici d'air 49 et d'essence 50 à proportion de quatorze grammes d'air 49 par gramme d'essence 50.

Pour cela, le mélangeur à recirculation forcée 1 ne nécessite aucune pompe à essence à haute pression, la pression de quelques bars ordinairement délivrée par les pompes à essence 53 équipant les systèmes d'injection multipoints les plus répandus en automobile étant par exemple suffisante pour alimenter la pompe de liquide à piston 32. En effet, c'est la pompe de liquide à piston 32 elle-même qui se charge de hausser la pression de l'essence 50 à plus de quarante bars nécessaire à l'introduction de ladite essence 50 dans l'enceinte de brassage 5 via la buse d'injection de liquide 9.

Pour atteindre le résultat recherché, le mélangeur à recirculation forcée 1 suivant l'invention ne nécessite pas non plus d'injecteur de haute précision dont la quantité injectée reste dans tous les cas incertaine, particulièrement à très bas débits. On notera d'ailleurs que la configuration particulière du mélangeur à recirculation forcée 1 ne nécessite pas d'atomiser l'essence 50 en fines gouttelettes pour en assurer l'entière vaporisation. En effet, ladite vaporisation peut s'effectuer à postériori dans la boucle de recirculation 6, sans dommage pour la richesse moyenne en essence 50 du mélange gazeux homogène 4.

Comme on peut le déduire des figures et de la présente description de fonctionnement du mélangeur à recirculation forcée 1, la pompe de liquide à piston 32 assure simultanément l'injection et la mesure du débit de l'essence 50 introduite dans l'enceinte de brassage 5 via la buse d'injection de liquide 9. Ladite pompe de liquide à piston 32 évite donc de recourir à un débitmètre d'essence 50 pour former le mélange gazeux homogène 4 à due proportion d'air 49 et d'essence 50.

On constate que si le diamètre du piston de pompe 33 est de douze millimètres, ceci avec une roue de vis sans fin 43 de trente dents, un pas de filetage de roue 56 et de filetage de piston 57 de un millimètre, et avec trente impulsions générées par le codeur à « effet Hall » à chaque tour du moteur électrique rotatif d'actionneur 39, une impulsion du codeur à « effet Hall » correspond à environ zéro virgule huit milligramme d'essence 50 injectée dans l'enceinte de brassage 5 via la buse d'injection de liquide 9.

Si le pas du filetage de roue 56 est divisé par deux, la quantité d'essence 50 injectée par impulsion du codeur à « effet Hall » est deux fois plus petite.

On notera qu'au nombre total d'impulsions générées par le codeur à « effet Hall » sur l'entièreté de la course du piston de pompe 33 correspond donc une certaine quantité d'essence 50, déterminée avec une grande précision.

En conséquence, la précision de la quantité d'essence 50 introduite dans l'enceinte de brassage 5 via la buse d'injection de liquide 9 entre deux impulsions du codeur à « effet Hall » est en moyenne très élevée.

Comme l'enceinte de brassage 5 dilue ladite quantité d'essence 50 dans une grande quantité de mélange gazeux homogène 4 sur un temps relativement long, la richesse du mélange gazeux homogène 4 soutiré par l'injecteur de stratification 20 est très précise, ce qui favorise la maîtrise en toutes circonstances du fonctionnement de la préchambre d'allumage à clapet 21 selon le brevet FR 3 061 743.

On remarque que le piston de pompe 33 étant à double effet, sa vitesse d'avancement maximale peut, par exemple si son diamètre est de douze millimètres, ne pas dépasser trois ou quatre millimètres par secondes pour alimenter les préchambres d'allumage à clapet 21 d'un moteur thermique 51 suralimenté de deux litres de cylindrée opérant à puissance maximale.

Cette vitesse millimétrique permet d'équiper ledit piston 33 d'un joint d'étanchéité de piston 19 parfaitement étanche dont la durée de vie sera longue malgré qu'il opère dans l'essence 50 qui ne présente aucune propriété lubrifiante particulière.

En effet, le joint d'étanchéité de piston 19 peut par exemple être composite et comporter une bague réalisée en PTFE chargé de particules antifriction, ladite bague étant maintenue au contact du cylindre de pompe 35. Un tel joint d'étanchéité de piston 19 est particulièrement adapté aux conditions de fonctionnement qui viennent d'être décrites et peut durer au moins aussi longtemps que le moteur thermique 51 dont il coopère à alimenter la préchambre d'allumage à clapet 21 en mélange gazeux homogène 4 via l'injecteur de stratification 20.

On notera que selon l'exemple de réalisation du mélangeur à recirculation forcée 1 suivant l'invention qui vient d'être décrit, le calculateur 45 compense avantageusement les pertes de débit d'essence 50 moyen lors des changements de direction du piston de pompe 33 à double effet dans le cylindre de pompe 35.

En effet, au point de rebroussement dudit piston 33, le moteur électrique rotatif d'actionneur 39 doit rattraper certains jeux tels que celui trouvé entre la vis sans fin 47 et la roue de vis sans fin 43, ou compenser la déformation du joint d'étanchéité de piston 19 dans sa gorge lors du changement du sens de la différence de pression à laquelle est soumis ledit joint 19.

Le calculateur 45 peut effectuer ce rattrapage en mesurant l'intensité du courant électrique nécessaire au moteur électrique rotatif d'actionneur 39 pour se mouvoir, ladite intensité permettant de détecter le moment où le piston de pompe 33 fait de nouveau face à une pression d'au moins quarante bars.

Le calculateur 45 peut également intégrer des données sur le rattrapage nécessaire à opérer au point de rebroussement du piston de pompe 33, ces données résultant d'essais au banc effectués préalablement à la mise en service du mélangeur à recirculation forcée 1 suivant l'invention.

Ainsi, tenant compte du temps alloué à la manœuvre de remise en charge du piston de pompe 33, le calculateur 45 peut reconstituer le débit moyen nécessaire à l'obtention du mélange gazeux homogène 4 selon le rapport air 49 sur essence 50 recherché, sachant que la variation temporaire de richesse vue par l'injecteur de stratification 20 est négligeable vu l'encours important de mélange gazeux homogène 4 que contient l'enceinte de brassage 5.

En figures 7 à 10, on a montré une variante de réalisation du mélangeur à recirculation forcée 1 suivant l'invention selon laquelle les moyens d'introduction de liquide en quantité contrôlée 10 ne sont plus constitués d'une pompe de liquide à piston 32 telle qu'elle vient d'être décrite, mais d'une pompe impulsionnelle 63 logée dans un carter de pompe 42.

Selon l'exemple de réalisation du mélangeur à recirculation forcée 1 suivant l'invention montré en figures 7 à 9, la pompe impulsionnelle 63 comprend un piston de pompe impulsionnelle 64 à simple effet qui, sous l'action d'un actionneur à solénoïde de pompe 65, peut se déplacer en translation dans un cylindre de pompe impulsionnelle 67.

Nous supposerons également ici que le gaz à mélanger 3 est de l'air 49 atmosphérique tandis que le liquide vaporisable 2 est de l'essence 50 telle que communément consommée par les automobiles.

Le piston de pompe impulsionnelle 64 forme avec le cylindre de pompe impulsionnelle 67 une chambre de pompe impulsionnelle 68 de volume variable dans laquelle peut être introduite l'essence 50 via un clapet d'admission de pompe impulsionnelle 69, et de laquelle peut être expulsée ladite essence 50 vers la buse d'injection de liquide 9 via un clapet de refoulement de pompe impulsionnelle 70.

On note que le clapet de refoulement de pompe impulsionnelle 70 peut être fortement taré - à plusieurs bars - de sorte que si la pression qui règne dans l'enceinte de brassage 5 est inférieure à celle qui règne dans le circuit d'essence 50 situé en amont de la pompe impulsionnelle 63, l'enceinte de brassage 5 ne se remplisse pas d'essence 50 de façon indésirable.

Pour injecter l'essence 50 dans l'enceinte de brassage 5, le calculateur 45 alimente en courant électrique la bobine de solénoïde 95 de l'actionneur à solénoïde de pompe 65. Ceci a pour effet de repousser le piston de pompe impulsionnelle 64 en direction de la chambre de pompe impulsionnelle 68, ledit piston 64 expulsant la quantité d'essence 50 correspondante hors de ladite chambre 68 via le clapet de refoulement de pompe impulsionnelle 70 et la buse d'injection de liquide 9.

Ceci fait, le calculateur 45 cesse d'alimenter la bobine de solénoïde 95 en courant électrique de sorte qu'un ressort de rappel de piston de pompe 66 ramène le piston de pompe impulsionnelle 64 au point mort bas et que la chambre de pompe impulsionnelle 68 admette à nouveau de l'essence 50 via son clapet d'admission de pompe impulsionnelle 69.

On note que le ressort de rappel de piston de pompe 66 n'est pas nécessaire si la pression d'alimentation d'essence 50 qui règne en amont du clapet d'admission de pompe impulsionnelle 69 suffit à repousser le piston de pompe impulsionnelle 64 au point mort bas dans le temps imparti.

En figures 7 à 9, on remarque la présence d'un accumulateur de buse 80 interposé entre la pompe impulsionnelle 63 et la buse d'injection de liquide 9.

L'accumulateur de buse 80 permet de prévoir une buse d'injection de liquide 9 ne laissant qu'une section faible au passage de l'essence 50 qui favorise une atomisation fine de ladite essence 50 au débouché de ladite buse 9 dans l'enceinte de brassage 5.

L'accumulateur de buse 80 permet également d'écrêter les pics de pression survenant en sortie du clapet de refoulement de pompe impulsionnelle 70 ce qui évite de sur-dimensionner la bobine de solénoïde 95 pour contrer lesdits pics.

En outre, l'accumulateur de buse 80 réduit l'amplitude des variations du débit d'essence 50 vaporisée dans l'enceinte de brassage 5 par la buse d'injection de liquide 9 ce qui conduit à une meilleure homogénéité du mélange gazeux homogène 4 formé dans ladite enceinte 5.

Selon l'exemple non-limitatif montré en figures 7 à 8, l'accumulateur de buse 80 comprend un piston d'accumulateur de buse 81 qui forme, avec un cylindre d'accumulateur 82, une chambre d'accumulateur 83, ledit piston 81 étant poussé en direction de ladite chambre 83 par un ressort d'accumulateur 84 cependant que la buse d'injection de liquide 9 est solidaire dudit piston 81 et traverse ce dernier de part en part dans le sens de sa longueur.

En figures 8 et 9, on remarque que des moyens de réglage de la course de solénoïde 96 permettent de régler la course effective du piston de pompe impulsionnelle 64 et donc, de régler la cylindrée de la pompe impulsionnelle 63.

On déduit aisément de ce qui précède que le débit d'essence 50 injectée dans l'enceinte de brassage 5 par la pompe impulsionnelle 63 est le produit de la cylindrée de ladite pompe 63 par son rendement volumétrique par sa fréquence d'actionnement.

A titre d'exemple, si la cylindrée de ladite pompe 63 est de treize millimètres cubes, si le rendement volumétrique de ladite pompe 63 est de soixante-dix pour cent, et que sa fréquence d'actionnement est de trente Hertz, alors, le débit de ladite pompe 63 est de deux cent soixante-treize millimètres cubes par seconde.

Pour que le calculateur 45 règle le débit effectif de la pompe impulsionnelle 63 nécessaire à la formation dans l'enceinte de brassage 5 du mélange gazeux homogène 4 selon le rapport air 49 sur essence 50 recherché, comme on le remarque en figures 7 à 9, le mélangeur à recirculation forcée 1 comprend un débitmètre de liquide vaporisable 71 qui retourne audit calculateur 45 le débit massique effectif d'essence 50 injectée par la buse d'injection de liquide 9 dans l'enceinte de brassage 5.

Grâce au débitmètre de liquide vaporisable 71, le calculateur met en œuvre une boucle logicielle d'asservissement de type « régulateur PID », connue en soi.

En effet, le débitmètre massique de gaz 46 retourne au calculateur 45 le débit massique effectif d'air 49 entrant dans l'enceinte de brassage 5, ce dont découle naturellement la consigne de débit d'essence 50 à introduire dans ladite enceinte 5 par la pompe impulsionnelle 63 tenant compte du rapport air 49 sur essence 50 recherché.

Le débit d'essence 50 forme donc la valeur réglée par le régulateur PID, ledit débit pouvant osciller en plus ou en moins autour de la valeur de consigne qui lui est assignée pourvu que la valeur effective dudit débit soit proche de ladite consigne lorsqu'elle est moyennée sur quelques secondes.

En effet, la circulation forcée par la turbine de brassage 13 du mélange gazeux homogène 4 dans l'enceinte de brassage 5 homogénéise ledit mélange 4 malgré des variations de débit d'essence 50 autour de la valeur de consigne.

Pour réguler le débit d'essence 50 à la hausse ou à la baisse, le calculateur 45 peut moduler la fréquence et/ou la puissance d'activation de l'actionneur à solénoïde de pompe 65 de la pompe impulsionnelle 63.

Selon l'exemple de réalisation non-limitatif du mélangeur à recirculation forcée 1 selon l'invention montré en figures 7 à 9, le débitmètre de liquide vaporisable 71 comprend notamment un piston de débitmètre 72 qui peut se déplacer de façon étanche dans un cylindre de débitmètre 73 de sorte à former d'une part, une chambre amont de débitmètre 75 reliée à la pompe à essence 53 du moteur thermique 51, et d'autre part, une chambre aval de débitmètre 76 qui est reliée à l'admission de la pompe impulsionnelle 63.

On note, particulièrement en figures 7 et 8, que le piston de débitmètre 72 comporte à chacune de ses extrémités un prolongateur étanche de piston de débitmètre 101 débouchant à l'air libre.

Les prolongateurs étanches de piston de débitmètre 101 garantissent que pour un même déplacement du piston de débitmètre 72, le volume d'essence 50 admis ou refoulé par la chambre amont de débitmètre 75 soit identique à celui simultanément admis ou refoulé par la chambre aval de débitmètre 76. Ainsi, le débit d'essence 50 délivré par la pompe à essence 53 n'est en rien perturbé par les allers et retours qu'effectue le piston de débitmètre 72 dans le cylindre de débitmètre 73, quelle que soit la vitesse desdits allers et retours.

La position du piston de débitmètre 72 dans le cylindre de débitmètre 73 est transmise au calculateur 45 par un capteur de position 74 qui, en l'occurrence, est un encodeur linéaire absolu tel qu'en commercialise la société « Posic ».

L'encodeur lit une réglette-cible 100 qui est portée par un tiroir guidé porte-réglette 97 ce dernier pouvant se déplacer en translation longitudinale dans un rail de guidage de tiroir 98 dans lequel il est logé à faible jeu d'une part, et dans le prolongement du piston de débitmètre 72 d'autre part.

On note que le tiroir guidé porte-réglette 97 est rendu solidaire en translation du piston de débitmètre 72 par un aimant d'attelage 99, ce dernier étant en permanence attiré par le prolongateur étanche de piston de débitmètre 101 qui est positionné du côté de la réglette-cible 100.

En figures 7 à 9, on remarque le ressort de rappel de piston de débitmètre 78 qui tend à déplacer le piston de débitmètre 72 en direction de la chambre amont de débitmètre 75.

On déduit aisément du schéma de la figure 7 le principe de fonctionnement du débitmètre de liquide vaporisable 71.

En effet, pour déterminer le débit massique d'essence 50 introduit dans l'enceinte de brassage 5 par la pompe impulsionnelle 63, le calculateur 45 récupère d'une part et via le capteur de position 74 la distance parcourue par unité de temps par le piston de débitmètre 72, et d'autre part au moyen d'un capteur de température 103 placé au niveau de la chambre aval de débitmètre 76, la température de ladite essence 50.

Par exemple, si la section efficace du piston de débitmètre 72 est de cent quarante millimètres carrés, quand ce dernier se déplace d'un millimètre par seconde, le débit volumique d'essence 50 introduit dans l'enceinte de brassage 5 par la pompe impulsionnelle 63 est de cent quarante millimètres cubes par seconde.

Pour calculer le débit massique d'essence 50 introduit dans l'enceinte de brassage 5, la densité à vingt degrés Celsius et le coefficient de dilatation thermique de ladite essence 50 étant connus car renseignés par le calculateur non représenté du moteur thermique 51, le calculateur 45 n'a plus qu'à multiplier la densité de ladite essence 50 par son débit volumique.

Pour plus de précision, un capteur de pression 102 peut éventuellement être prévu au niveau de la chambre aval de débitmètre 76, pour permettre au calculateur 45 d'intégrer la compressibilité de l'essence 50 dans son calcul de densité de ladite essence 50.

Lorsque le piston de débitmètre 72 arrive en fin de course de lecture, c'est à dire lorsque le volume de la chambre aval de débitmètre 76 atteint sa valeur minimale prédéterminée, la vanne de rappel de piston de débitmètre 72 s'ouvre et met en relation ladite chambre aval 76 avec la chambre amont de débitmètre 75, ce qui a pour effet de transférer de l'essence 50 contenue dans la chambre amont de débitmètre 75 dans la chambre aval de débitmètre 76.

Ce transfert d'essence 50 résulte de l'effort qu'exerce le ressort de rappel de piston de débitmètre 78 sur le piston de débitmètre 72, ledit effort ayant pour effet de déplacer ce dernier en direction de la chambre amont de débitmètre 75.

Durant ledit transfert d'essence 50 qui peut durer de l'ordre d'une centaine de millisecondes, la mesure de débit volumique d'essence 50 est momentanément interrompue. Toutefois, l'erreur totale de mesure est très faible car le calculateur 45 peut reconstituer le débit d'essence 50 durant l'interruption de la mesure en effectuant la moyenne entre le débit d'essence 50 relevé juste avant l'ouverture de la vanne de rappel de piston de débitmètre 72 et celui relevé juste après la fermeture de ladite vanne 72.

Il est à noter à ce titre que la manœuvre de rappel du piston de débitmètre 72 qui vient d'être décrite n'intervient que rarement, par exemple toutes les dix minutes lorsque le moteur thermique 51 fonctionne au ralenti, et toutes les quatre secondes lorsque ledit moteur 51 opère à pleine puissance.

On note que la vanne de rappel de piston de débitmètre 72 peut être avantageusement de type « normalement ouverte » comme montrée en figures 7, 9 et 10, de sorte que lorsque le moteur 51 est durablement arrêté la dilatation ou la contraction thermique de l'essence 50 contenue dans les circuits et volumes internes du mélangeur à recirculation forcée 1 suivant l'invention ne puissent jamais se traduire par des injections intempestives de dite essence 50 dans l'enceinte de brassage 5 via la pompe impulsionnelle 63 et la buse d'injection de liquide 9.

En figure 10, on a montré plus en détail la vanne de rappel de piston de débitmètre 72 qui comprend une plaque d'étanchéité orientable 85 pouvant être maintenue plaquée sur un orifice de vanne 86 par l'intermédiaire d'un joint d'étanchéité de vanne 87 par un actionneur à solénoïde de vanne 88, ce dernier poussant sur la plaque d'étanchéité orientable 85 par l'intermédiaire d'une liaison élastique 89 constituée d'un ressort de maintien en fermeture 93 dont la longueur maximale est limitée par une goupille de butée 94.

En figure 7, on a montré également certains accessoires utiles au bon fonctionnement du mélangeur à recirculation forcée 1 selon l'invention dans le cadre de la mise en œuvre de la préchambre d'allumage à clapet 21 objet du brevet FR 3 061 743, sur un moteur thermique 51 automobile.

On remarque par exemple le clapet anti-retour étanche de sortie de compresseur 90 qui permet de maintenir l'enceinte de brassage 5 sous pression lorsque le moteur thermique 51 est arrêté durant quelques secondes à quelques minutes, ledit clapet 90 trouvant toute son utilité lorsque les clapets de refoulement du compresseur 18 ne sont pas parfaitement étanches.

On note aussi l'électrovanne de décharge au canister 91 qui permet de dépressuriser progressivement l'enceinte de brassage 5 lorsque le moteur thermique 51 est à l'arrêt et se refroidit. Lorsque ladite électrovanne 91 s'ouvre, l'essence 50 à l'état de vapeur qui forme le mélange gazeux homogène 4 contenu dans ladite enceinte 5 est transférée dans un canister 92 connu en soi, un tel canister 92 équipant la majorité des automobiles modernes.

On notera que les exemples de réalisation du mélangeur à recirculation forcée 1 selon l'invention qui viennent d'être décrits sont non-limitatifs.

En effet, le moteur thermique avec son mélangeur à recirculation forcée 1 selon l'invention peut s'appliquer à d'autres domaines que celui des moteurs thermiques, tels que la chimie, les procédés industriels ou tous appareils dans quelque domaine que ce soit qui nécessitent la réalisation in situ d'un mélange qui soit homogène et/ou précisément dosé constitué d'au moins un gaz et d'au moins un liquide.

Les possibilités du mélangeur à recirculation forcée 1 selon l'invention ne s'en limitent pas aux applications qui viennent d'être décrites et il doit d'ailleurs être entendu que la description qui précède n'a été donnée qu'à titre d'exemple et qu'elle ne limite nullement le domaine de ladite invention qui est définie dans les revendications.

## Revendications

1. Moteur thermique comportant un mélangeur à recirculation forcée (1) prévu pour mélanger au moins un liquide vaporisable (2) avec au moins un gaz à mélanger (3) de sorte à former un mélange gazeux homogène (4) qui est injecté sous la forme d'une charge pilote (55) dans une préchambre d'allumage par un injecteur de stratification (20), **caractérisé en ce que** ledit mélangeur comprend :
• Au moins une enceinte de brassage (5) dont la cavité interne forme une boucle de recirculation (6) dans laquelle le mélange gazeux homogène (4) peut continuellement circuler, le début et la fin de la boucle de recirculation (6) étant confondus ;
• Au moins un conduit d'admission de gaz (7) qui débouche directement ou indirectement dans l'enceinte de brassage (5) et par lequel est introduit le gaz à mélanger (3) dans la boucle de recirculation (6) par des moyens d'introduction de gaz en quantité connue (8) ;
• Au moins une buse d'injection de liquide (9) qui débouche directement ou indirectement dans l'enceinte de brassage (5) pour introduire le liquide vaporisable (2) dans la boucle de recirculation (6), ladite buse (9) étant alimentée par des moyens d'introduction de liquide en quantité contrôlée (10) dont le débit de liquide vaporisable (2) est piloté par un calculateur (45), ledit liquide vaporisable (2) formant, avec le gaz à mélanger (3), le mélange gazeux homogène (4) ;
• Au moins un conduit de soutirage de mélange (11) qui débouche directement ou indirectement dans l'enceinte de brassage (5) et par lequel peut être soutiré le mélange gazeux homogène (4) de la boucle de recirculation (6) par des moyens de soutirage de gaz (12) ;
• Au moins une turbine de brassage (13) qui est mise en mouvement par un moteur de turbine (28) et qui est positionnée dans la boucle de recirculation (6), ladite turbine (13) forçant le mélange gazeux homogène (4) à circuler dans ladite boucle (6).

2. Moteur thermique comportant un mélangeur à recirculation forcée suivant la revendication 1, **caractérisé en ce que** l'enceinte de brassage (5) comprend au moins un conduit coaxial externe (14) dont chaque extrémité est fermée par une terminaison de rebroussement (15) cependant qu'au moins un conduit coaxial interne (16) est logé dans le conduit coaxial externe (14) et qu'un espace est laissé au mélange gazeux homogène (4) pour circuler d'une part, entre chaque terminaison de rebroussement (15) et le conduit coaxial interne (16) et d'autre part, entre la face interne du conduit coaxial externe (14) et la face externe du conduit coaxial interne (16), le sens de circulation du mélange gazeux homogène (4) dans le conduit coaxial externe (14) étant contraire au sens de circulation dudit mélange (4) dans le conduit coaxial interne (16).

3. Moteur thermique comportant un mélangeur à recirculation forcée suivant la revendication 2, **caractérisé en ce que** la turbine de brassage (13) est en tout ou partie logée dans l'une des terminaisons de rebroussement (15), le mélange gazeux homogène (4) étant aspiré par le centre de ladite turbine (13) via le conduit coaxial interne (16) avant d'être refoulé en périphérie de ladite turbine (13) via l'espace laissé entre la face interne du conduit coaxial externe (14) et la face externe du conduit coaxial interne (16).

4. Moteur thermique comportant un mélangeur à recirculation forcée suivant la revendication 3, **caractérisé en ce que** la terminaison de rebroussement (15) qui héberge la turbine de brassage (13) présente une forme hémi-toroïdale en creux tandis que des pales (17) que comprend la turbine de brassage (13) ont une forme complémentaire hémi-toroïdale en saillie, un jeu faible étant laissé entre ladite terminaison (15) et lesdites pales (17).

5. Moteur thermique comportant un mélangeur à recirculation forcée suivant la revendication 2, **caractérisé en ce que** le conduit d'admission de gaz (7) traverse l'une des terminaisons de rebroussement (15) pour déboucher dans le conduit coaxial interne (16).

6. Moteur thermique comportant un mélangeur à recirculation forcée suivant la revendication 5, **caractérisé en ce que** la terminaison de rebroussement (15) traversée par le conduit d'admission de gaz (7) présente une forme hémi-toroïdale en creux de laquelle émerge ledit conduit (7).

7. Moteur thermique comportant un mélangeur à recirculation forcée suivant la revendication 5, **caractérisé en ce que** la buse d'injection de liquide (9) débouche à l'intérieur du conduit d'admission de gaz (7), ou en sortie de ce dernier.

8. Moteur thermique comportant un mélangeur à recirculation forcée suivant la revendication 2, **caractérisé en ce que** le conduit coaxial interne (16) est maintenu en position dans le conduit coaxial externe (14) par au moins une aube de brassage (22) qui relie radialement ledit conduit coaxial interne (16) audit conduit coaxial externe (14).

9. Moteur thermique comportant un mélangeur à recirculation forcée suivant la revendication 2, **caractérisé en ce que** le conduit coaxial externe (14) ou l'une quelconque de ses terminaisons de rebroussement (15) est en tout ou partie enveloppé d'un anneau de soutirage (23), l'intérieur de ce dernier étant relié à l'intérieur du conduit coaxial externe (14) par au moins un orifice radial de soutirage (24), le conduit de soutirage de mélange (11) étant relié à l'enceinte de brassage (5) par l'intermédiaire dudit anneau (23) et dudit orifice (24).

10. Moteur thermique comportant un mélangeur à recirculation forcée suivant la revendication 1, **caractérisé en ce que** l'enceinte de brassage (5) comprend des moyens de réchauffage ou refroidissement (25).

11. Moteur thermique comportant un mélangeur à recirculation forcée suivant la revendication 1, **caractérisé en ce que** le moteur de turbine (28) est un moteur électrique (29) qui comprend d'une part, un rotor (30) qui est solidaire en rotation de la turbine de brassage (13) et qui est enfermé dans l'enceinte de brassage (5), et d'autre part, un stator (31) qui est placé à l'extérieur de ladite enceinte (5), des champs magnétiques produits par ledit stator (31) pouvant passer au travers de la paroi de l'enceinte de brassage (5) pour mettre le rotor (30) en rotation.

12. Moteur thermique comportant un mélangeur à recirculation forcée suivant la revendication 1, **caractérisé en ce que** les moyens d'introduction de liquide en quantité contrôlée (10) sont constitués d'une pompe de liquide à piston (32) qui comprend un carter de pompe (42), ladite pompe (32) comprenant aussi au moins un piston de pompe (33) à simple ou double effet qui, sous l'action d'un actionneur de piston (34) coopérant avec des moyens de contrôle de déplacement (44), peut se déplacer en translation dans un cylindre de pompe (35) pour former au moins une chambre de pompe (36) de volume variable dans laquelle peut être introduit le liquide vaporisable (2) via un clapet d'admission (37), et de laquelle peut être expulsé ledit liquide (2) vers la buse d'injection de liquide (9) via un clapet de refoulement (38).

13. Moteur thermique comportant un mélangeur à recirculation forcée suivant la revendication 12, **caractérisé en ce que** l'actionneur de piston (34) est constitué d'un moteur électrique rotatif d'actionneur (39) solidaire du carter de pompe (42), ledit moteur (39) pouvant indifféremment tourner dans un sens ou dans l'autre pour entraîner en rotation des moyens de transmission menants (40) qui sont solidaires en translation du carter de pompe (42) et qui coopèrent avec des moyens de transmission menés (41) qui sont solidaires en translation du piston de pompe (33), lesdits moyens de transmission menants (40) réagissant avec ledit carter (42) pour déplacer en translation longitudinale lesdits moyens de transmission menés (41).

14. Moteur thermique comportant un mélangeur à recirculation forcée suivant la revendication 13, **caractérisé en ce que** les moyens de transmission menants (40) sont formés d'une vis sans fin (47) qui entraine en rotation une roue de vis sans fin (43) qui présente un filetage de roue (56), tandis que les moyens de transmission menés (41) sont constitués d'un filetage de piston (57) qui coopère avec le filetage de roue (56).

15. Moteur thermique comportant un mélangeur à recirculation forcée suivant la revendication 1, **caractérisé en ce qu'**un débitmètre massique de gaz (46) mesure, directement ou indirectement, le débit massique du gaz à mélanger (3) qui circule dans le conduit d'admission de gaz (7) et/ou le débit massique du mélange gazeux homogène (4) qui circule dans le conduit de soutirage de mélange (11).

16. Moteur thermique comportant un mélangeur à recirculation forcée suivant la revendication 1, **caractérisé en ce que** les moyens d'introduction de liquide en quantité contrôlée (10) sont constitués d'une pompe impulsionnelle (63) qui comprend un piston de pompe impulsionnelle (64) à simple ou double effet qui, sous l'action d'un actionneur à solénoïde de pompe (65), peut se déplacer en translation dans un cylindre de pompe impulsionnelle (67) avec lequel il forme au moins une chambre de pompe impulsionnelle (68) de volume variable dans laquelle peut être introduit le liquide vaporisable (2) via un clapet d'admission de pompe impulsionnelle (69), et de laquelle peut être expulsé ledit liquide (2) vers la buse d'injection de liquide (9) via un clapet de refoulement de pompe impulsionnelle (70).

17. Moteur thermique comportant un mélangeur à recirculation forcée suivant la revendication 1, **caractérisé en ce que** le débit volumique et/ou massique de liquide vaporisable (2) est retourné au calculateur (45) par un débitmètre de liquide vaporisable (71) placé en amont ou en aval des moyens d'introduction de liquide en quantité contrôlée (10).

18. Moteur thermique comportant un mélangeur à recirculation forcée suivant la revendication 17, **caractérisé en ce que** le débitmètre de liquide vaporisable (71) est constitué d'un piston de débitmètre (72) qui peut se déplacer de façon étanche dans un cylindre de débitmètre (73) de sorte à former d'une part, une chambre amont de débitmètre (75) qui est directement ou indirectement reliée à une source de pression (77), et d'autre part, une chambre aval de débitmètre (76) qui est directement ou indirectement reliée à la buse d'injection de liquide (9), la position dudit piston (72) dans ledit cylindre (73) étant transmise au calculateur (45) par un capteur de position (74) cependant qu'un ressort de rappel de piston de débitmètre (78) tend à repousser le piston de débitmètre (72) en direction de la chambre amont de débitmètre (75).

19. Moteur thermique comportant un mélangeur à recirculation forcée suivant la revendication 18, **caractérisé en ce que** la chambre amont de débitmètre (75) peut être mise en relation avec la chambre aval de débitmètre (76) par une vanne de rappel de piston de débitmètre (72).

20. Moteur thermique comportant un mélangeur à recirculation forcée suivant la revendication 19, **caractérisé en ce que** la vanne de rappel de piston de débitmètre (72) comprend une plaque d'étanchéité orientable (85) qui peut être maintenue plaquée sur un orifice de vanne (86) par un actionneur à solénoïde de vanne (88).

21. Moteur thermique comportant un mélangeur à recirculation forcée suivant la revendication 1, **caractérisé en ce qu'**un accumulateur de buse (80) s'interpose entre les moyens d'introduction de liquide en quantité contrôlée (10) et la buse d'injection de liquide (9).

22. Moteur thermique comportant un mélangeur à recirculation forcée suivant la revendication 21, **caractérisé en ce que** l'accumulateur de buse (80) comprend un piston d'accumulateur de buse (81) qui forme, avec un cylindre d'accumulateur (82), une chambre d'accumulateur (83), ledit piston (81) étant poussé en direction de ladite chambre (83) par un ressort d'accumulateur (84) cependant que la buse d'injection de liquide (9) est solidaire dudit piston (81) et traverse ce dernier de part en part dans le sens de sa longueur.

## Patentansprüche

1. Verbrennungsmotor, der eine Mischvorrichtung mit zwangsläufiger Umwälzung (1) aufweist, um mindestens eine verdampfungsfähige Flüssigkeit (2) mit mindestens einem zu mischenden Gas (3) derart zu vermischen, dass eine homogene Gasmischung (4) gebildet wird, die mittels einer Schichtungseinspritzvorrichtung (20) in Form einer Pilotcharge (55) in eine Zündvorkammer eingespritzt wird, **dadurch gekennzeichnet, dass** die Mischvorrichtung Folgendes umfasst:
• mindestens eine Mischkammer (5) deren innenliegender Hohlraum eine Umwälzschleife (6) bildet, in welcher die homogene Gasmischung (4) kontinuierlich strömen kann, wobei der Beginn mit dem das Ende der Umwälzschleife (6) zusammenfällt;
• mindestens eine Gaseinlassleitung (7), welche auf direkte oder indirekte Weise in die Mischkammer (5) einmündet, und durch welche das zu mischende Gas (3) von Mitteln (8) zur Einleitung von Gas in bekannter Menge in die Umwälzschleife (6) eingeleitet wird;
• mindestens eine Flüssigkeitseinspritzdüse (9), die auf direkte oder indirekte Weise in die Mischkammer (5) einmündet, um die verdampfungsfähige Flüssigkeit (2) in die Umwälzschleife (6) einzuleiten, wobei die Düse (9) von Mitteln (10) zur Einleitung von Flüssigkeit in kontrollierter Menge gespeist wird, wobei die Flussrate an verdampfungsfähiger Flüssigkeit (2) von einem Steuergerät (45) gesteuert wird, wobei die verdampfungsfähige Flüssigkeit (2) mit dem zu mischenden Gas (3) die homogene Gasmischung (4) bildet;
• mindestens eine Mischungsentnahmeleitung (11), welche auf direkte oder indirekte Weise in die Mischkammer (5) einmündet und durch welche die homogene Gasmischung (4) durch Gasentnahmemittel (12) aus der Umwälzschleife (6) entnommen werden kann;
• mindestens eine Mischturbine (13), die von einem Turbinenmotor (28) in Bewegung gesetzt wird und die in der Umwälzschleife (6) angeordnet ist, wobei die Turbine (13) bewirkt, dass die homogene Gasmischung (4) zwangsläufig in der Schleife (6) strömt.

2. Verbrennungsmotor, der eine Mischvorrichtung mit zwangsläufiger Umwälzung gemäß Anspruch 1 aufweist, **dadurch gekennzeichnet, dass** die Mischkammer (5) mindestens eine außenliegende koaxiale Leitung (14) umfasst, wobei jedes von deren Enden durch ein Umkehrendstück (15) verschlossen ist, während mindestens eine innenliegende koaxiale Leitung (16) in der außenliegenden koaxialen Leitung (14) aufgenommen ist und ein Raum dafür vorgesehen ist, dass die homogene Gasmischung (4) einerseits zwischen jedem der Umkehrendstücke (15) und der innenliegenden koaxialen Leitung (16) sowie andererseits zwischen der Innenseite der außenliegenden koaxialen Leitung (14) und der Außenseite der innenliegenden koaxialen Leitung (16) strömen kann, wobei die Strömungsrichtung der homogenen Gasmischung (4) in der außenliegenden koaxialen Leitung (14) gegenläufig zu der Strömungsrichtung der Mischung (4) in der innenliegenden koaxialen Leitung (16) ist.

3. Verbrennungsmotor, der eine Mischvorrichtung mit zwangsläufiger Umwälzung gemäß Anspruch 2 aufweist, **dadurch gekennzeichnet, dass** die Mischturbine (13) vollständig oder teilweise in einem der Umkehrendstücke (15) aufgenommen ist, wobei die homogene Gasmischung (4) von der Mitte der Turbine (13) durch die innenliegende koaxiale Leitung (16) angesaugt wird, bevor sie im Randbereich der Turbine (13) durch den Raum, welcher zwischen der Innenseite der außenliegenden koaxialen Leitung (14) und der Außenseite der innenliegenden koaxialen Leitung (16) verbleibt, wieder ausgestoßen wird.

4. Verbrennungsmotor, der eine Mischvorrichtung mit zwangsläufiger Umwälzung gemäß Anspruch 3 aufweist, **dadurch gekennzeichnet, dass** das Umkehrendstück (15), in welchem sich die Mischturbine (13) befindet, die Form eines hohlen Halbtorus hat, während die Blätter (17), welche die Mischturbine (13) umfasst, die Form eines hervorstehenden komplementären Halbtorus haben, wobei zwischen dem Endstück (15) und den Blättern (17) ein geringes Spiel verbleibt.

5. Verbrennungsmotor, der eine Mischvorrichtung mit zwangsläufiger Umwälzung gemäß Anspruch 2 aufweist, **dadurch gekennzeichnet, dass** die Gaseinlassleitung (7) durch eines der Umkehrendstücke (15) verläuft, um in die innenliegende koaxiale Leitung (16) einzumünden.

6. Verbrennungsmotor, der eine Mischvorrichtung mit zwangsläufiger Umwälzung gemäß Anspruch 5 aufweist, **dadurch gekennzeichnet, dass** das Umkehrendstück, durch welches die Gaseinlassleitung (7) verläuft, die Form eines hohlen Halbtorus aufweist, aus dem die Leitung (7) hervorgeht.

7. Verbrennungsmotor, der eine Mischvorrichtung mit zwangsläufiger Umwälzung gemäß Anspruch 5 aufweist, **dadurch gekennzeichnet, dass** die Flüssigkeitseinspritzdüse (9) ins Innere der Gaseinlassleitung (7) oder ausgangsseitig der letzteren einmündet.

8. Verbrennungsmotor, der eine Mischvorrichtung mit zwangsläufiger Umwälzung gemäß Anspruch 2 aufweist, **dadurch gekennzeichnet, dass** die innenliegende koaxiale Leitung (16) durch mindestens eine Mischschaufel (22), welche die innenliegende koaxiale Leitung (16) radial mit der außenliegenden koaxialen Leitung (14) verbindet, in der außenliegenden koaxialen Leitung (14) an Ort und Stelle gehalten wird.

9. Verbrennungsmotor, der eine Mischvorrichtung mit zwangsläufiger Umwälzung gemäß Anspruch 2 aufweist, **dadurch gekennzeichnet, dass** die außenliegende koaxiale Leitung (14) oder ein beliebiges der Umkehrendstücke (15) vollständig oder teilweise von einem Entnahmering (23) umhüllt ist, wobei das Innere des letzteren durch mindestens eine radiale Entnahmeöffnung (24) mit dem Inneren der außenliegenden koaxialen Leitung (14) verbunden ist, wobei die Mischungsentnahmeleitung (11) mittels des Rings (23) und der Öffnung (24) mit der Mischkammer (5) verbunden ist.

10. Verbrennungsmotor, der eine Mischvorrichtung mit zwangsläufiger Umwälzung gemäß Anspruch 1 aufweist, **dadurch gekennzeichnet, dass** Mischkammer (5) Mittel (25) zum Erwärmen oder Abkühlen umfasst.

11. Verbrennungsmotor, der eine Mischvorrichtung mit zwangsläufiger Umwälzung gemäß Anspruch 1 aufweist, **dadurch gekennzeichnet, dass** es sich bei dem Turbinenmotor (28) um einen Elektromotor (29) handelt, der einerseits einen Rotor, welcher drehfest mit der Mischturbine (13) verbunden ist und welcher in der Mischkammer (5) eingeschlossen ist, und andererseits einen Stator (31) umfasst, welcher außerhalb der Kammer (5) angeordnet ist, wobei die Magnetfelder, welche von dem Stator (31) erzeugt werden, durch die Wand der Mischkammer (5) gelangen können, um den Rotor (30) in eine Drehbewegung zu versetzen.

12. Verbrennungsmotor, der eine Mischvorrichtung mit zwangsläufiger Umwälzung gemäß Anspruch 1 aufweist, **dadurch gekennzeichnet, dass** die Mittel (10) zum Einleiten von Flüssigkeit in kontrollierter Menge (10) aus einer Flüssigkeitskolbenpumpe (32) bestehen, die ein Pumpengehäuse (42) umfasst, wobei die Pumpe (32) mindestens einen einfach oder doppelt wirkenden Pumpenkolben (33) umfasst, welcher in einem Pumpenzylinder (35) eine Translationsbewegung erfahren kann, wobei er unter Einwirkung eines Kolbenstellorgans (34) mit Bewegungssteuerungsmitteln (44) zusammenwirkt, um mindestens eine Pumpenkammer (36) von variabler Volumen zu bilden, in welche die verdampfungsfähige Flüssigkeit (2) über ein Einlassventil (37) eingeleitet werden kann, und aus welcher die Flüssigkeit (2) über ein Ausstoßventil (38) zur Flüssigkeitseinspritzdüse (9) hin ausgestoßen werden kann.

13. Verbrennungsmotor, der eine Mischvorrichtung mit zwangsläufiger Umwälzung gemäß Anspruch 12 aufweist, **dadurch gekennzeichnet, dass** das Kolbenstellorgan (34) aus einem Elektromotor (39) zum Drehen des Stellorgans besteht, der fest mit dem Pumpengehäuse (42) verbunden ist, wobei der Motor (39) sich beliebig in die eine oder die andere Richtung drehen kann, um antreibende Übertragungsmittel (40) in Drehbewegung zu versetzen, welche translationsfest mit dem Pumpengehäuse (42) verbunden sind und welche mit angetriebenen Übertragungsmitteln (41) zusammenwirken, die translationsfest mit dem Pumpenkolben (33) verbunden sind, wobei die angetriebenen Übertragungsmittel (40) mit dem Gehäuse (42) derart reagieren, dass die angetriebenen Übertragungsmittel (41) eine Translationsbewegung in Längsrichtung erfahren.

14. Verbrennungsmotor, der eine Mischvorrichtung mit zwangsläufiger Umwälzung gemäß Anspruch 13 aufweist, **dadurch gekennzeichnet, dass** die antreibenden Übertragungsmittel (40) aus einer Endlosschnecke (47) bestehen, die ein Endlosschneckenrad (43) in eine Drehbewegung versetzt, welches mit einem Radgewinde (56) versehen ist, während die angetriebenen Übertragungsmittel (41) aus einem Kolbengewinde (57) bestehen, das mit dem Radgewinde (56) zusammenwirkt.

15. Verbrennungsmotor, der eine Mischvorrichtung mit zwangsläufiger Umwälzung gemäß Anspruch 1 aufweist, **dadurch gekennzeichnet, dass** ein massenbezogenes Gasdurchflussmessgerät (46) auf direkte oder indirekte Weise den Massendurchsatz des zu mischendem Gases (3), welches in der Gaseinlassleitung (7) strömt, und/oder den Massendurchsatz der homogenen Gasmischung (4) misst, welche in der Mischungsentnahmeleitung (11) strömt.

16. Verbrennungsmotor, der eine Mischvorrichtung mit zwangsläufiger Umwälzung gemäß Anspruch 1 aufweist, **dadurch gekennzeichnet, dass** die Mittel (10) zum Einleiten von Flüssigkeit in kontrollierter Menge aus einer Impulspumpe (63) bestehen, die einen einfach oder doppelt wirkenden einen Impulspumpenkolben (64) umfasst, welcher unter Einwirkung eines Stellorgans (65) mit Pumpenzylinderspule eine Translationsbewegung in einem Impulspumpenzylinder (67) erfahren kann, mit welchem er mindestens eine Impulspumpenkammer (68) mit variablem Volumen bildet, in welche die verdampfungsfähige Flüssigkeit (2) über ein Impulspumpeneinlassventil (69) eingeleitet werden kann und aus welcher die Flüssigkeit (2) über ein Impulspumpenausstoßventil (70) zur Flüssigkeitseinspritzdüse (9) hin ausgestoßen werden kann.

17. Verbrennungsmotor, der eine Mischvorrichtung mit zwangsläufiger Umwälzung gemäß Anspruch 1 aufweist, **dadurch gekennzeichnet, dass** der Volumen- und/oder Massendurchsatz an verdampfungsfähiger Flüssigkeit (2) mittels eines Durchflussmessgeräts (71) für die verdampfungsfähige Flüssigkeit, das stromaufwärts oder stromabwärts der Mittel (10) zur Flüssigkeitseinleitung in kontrollierter Menge angeordnet ist, wieder dem Steuergerät (45) zugeführt wird.

18. Verbrennungsmotor, der eine Mischvorrichtung mit zwangsläufiger Umwälzung gemäß Anspruch 17 aufweist, **dadurch gekennzeichnet, dass** das Durchflussmessgerät (71) für die verdampfungsfähige Flüssigkeit aus einem Durchflussmessgerätkolben (72) besteht, der sich unter Wahrung der Dichtigkeit in einem Durchflussmessgerätzylinder (73) derart bewegen kann, dass sich einerseits eine stromaufwärts gelegene Durchflussmessgerätkammer (75), welche auf direkte oder indirekte Weise mit einer Druckquelle (77) verbunden ist, und andererseits eine stromabwärts gelegene Durchflussmessgerätkammer (76) bildet, welche auf direkte oder indirekte Weise mit der Flüssigkeitseinspritzdüse (9) verbunden ist, wobei die Position des Kolbens (72) in dem Zylinder (73) von einem Positionssensor (74) an das Steuergerät (45) übertragen wird, während eine Feder (78) zum Rückstellen des Durchflussmessgerätkolbens dazu neigt, den Durchflussmessgerätkolben (72) in Richtung der stromaufwärts gelegenen Durchflussmessgerätkammer (75) zu zurückzudrücken.

19. Verbrennungsmotor, der eine Mischvorrichtung mit zwangsläufiger Umwälzung gemäß Anspruch 18 aufweist, **dadurch gekennzeichnet, dass** die stromaufwärts gelegene Durchflussmessgerätkammer (75) durch ein Ventil zum Rückstellen des Durchflussmessgerätkolbens (72) mit der stromabwärts gelegenen Durchflussmessgerätkammer (76) in Verbindung gebracht werden kann.

20. Verbrennungsmotor, der eine Mischvorrichtung mit zwangsläufiger Umwälzung gemäß Anspruch 19 aufweist, **dadurch gekennzeichnet, dass** das Ventil zum Rückstellen des Durchflussmessgerätkolbens (72) eine ausrichtbare Abdichtungsplatte (85) umfasst, die durch ein Ventilstellorgan (88) mit Zylinderspule auf einer Ventilöffnung (86) festgehalten werden kann.

21. Verbrennungsmotor, der eine Mischvorrichtung mit zwangsläufiger Umwälzung gemäß Anspruch 1 aufweist, **dadurch gekennzeichnet, dass** ein Düsensammelorgan (80) zwischen den Mitteln (10) zur Einleitung von Flüssigkeit in kontrollierter Menge und der Flüssigkeitseinspritzdüse (9) angeordnet ist.

22. Verbrennungsmotor, der eine Mischvorrichtung mit zwangsläufiger Umwälzung gemäß Anspruch 21 aufweist, **dadurch gekennzeichnet, dass** das Düsensammelorgan (80) einen Düsensammelorgankolben (81) umfasst, der mit einem Sammelorganzylinder (82) eine Sammelorgankammer (83) bildet, wobei der Kolben (81) von einer Sammelorganfeder (84) zur Kammer (83) hin gedrückt wird, während die Flüssigkeitseinspritzdüse (9) fest mit dem Kolben (81) verbunden ist und in Längsrichtung vollständig durch letzteren verläuft.

## Claims

1. Heat engine comprising a forced recirculation mixer (1) designed to mix at least one vapourisable liquid (2) with at least one gas to be mixed (3) so as to form a homogeneous gas mixture (4) which is injected in the form of a pilot charge (55) into an ignition prechamber by a stratification injector (20), **characterised in that** said mixer comprises:
• at least one mixing enclosure (5) the internal cavity of which forms a recirculation loop (6) in which the homogeneous gas mixture (4) can continuously flow, the start and the end of the recirculation loop (6) being merged;
• at least one gas inlet duct (7) which opens directly or indirectly into the mixing enclosure (5) and through which the gas to be mixed (3) is introduced into the recirculation loop (6) by means (8)for introducing gas in a known quantity;
• at least one liquid injection nozzle (9) which opens directly or indirectly into the mixing enclosure (5) to introduce the vapourisable liquid (2) into the recirculation loop (6), said nozzle (9) being supplied by means (10) for introducing liquid in controlled quantity, the flow rate of vapourisable liquid (2) of which is controlled by a computer (45), said vapourisable liquid (2) forming, with the gas (3) to be mixed, the homogeneous gas mixture (4);
• at least one mixture withdrawal duct (11) that opens directly or indirectly into the mixing enclosure (5) and through which the homogeneous gas mixture (4) can be withdrawn from the recirculation loop (6) by gas withdrawal means (12);
• at least one mixing turbine (13) which is set in motion by a turbine motor (28) and which is positioned in the recirculation loop (6), said turbine (13) forcing the homogeneous gas mixture (4) to flow in said loop (6).

2. Heat engine comprising a forced recirculation mixer according to claim 1, **characterised in that** the mixing enclosure (5) comprises at least one outer coaxial duct (14), each end of which is closed by a reversal termination (15), while at least one inner coaxial duct (16) is housed in the outer coaxial duct (14) and that a space is left for the homogeneous gas mixture (4) to flow, on the one hand, between each reversal termination (15) and the inner coaxial duct (16) and, on the other hand, between the inner face of the outer coaxial duct (14) and the outer face of the inner coaxial duct (16), the flow direction of the homogeneous gas mixture (4) in the outer coaxial duct (14) being opposite to the flow direction of said mixture (4) in the inner coaxial duct (16).

3. Heat engine comprising a forced recirculation mixer according to claim 2, **characterised in that** the mixing turbine (13) is entirely or partly housed in one of the reversal terminations (15), the homogeneous gas mixture (4) being sucked by the centre of said turbine (13) via the internal coaxial duct (16) before being discharged at the periphery of said turbine (13) via the space left between the internal face of the external coaxial duct (14) and the external face of the internal coaxial duct (16).

4. Heat engine comprising a forced recirculation mixer according to claim 3, **characterised in that** the reversal termination (15) that houses the mixing turbine (13) has a recessed hemi-toroidal shape while blades (17) that the mixing turbine (13) comprises have a complementary projecting hemi-toroidal shape, a small clearance being left between said termination (15) and said blades (17).

5. Heat engine comprising a forced recirculation mixer according to claim 2, **characterised in that** the gas inlet duct (7) passes through one of the reversal terminations (15) to open into the inner coaxial duct (16).

6. Heat engine comprising a forced recirculation mixer according to claim 5, **characterised in that** the reversal termination (15) through which the gas inlet duct (7) passes has a semi-toroidal shape in which said duct (7) emerges.

7. Heat engine comprising a forced recirculation mixer according to claim 5, **characterised in that** the liquid injection nozzle (9) opens inside the gas inlet duct (7), or at the outlet thereof.

8. Heat engine comprising a forced recirculation mixer according to claim 2, **characterised in that** the inner coaxial duct (16) is held in position in the outer coaxial duct (14) by at least one mixing blade (22) which radially connects said inner coaxial duct(16) to said outer coaxial duct(14).

9. Heat engine comprising a forced recirculation mixer according to claim 2, **characterised in that** the outer coaxial duct (14) or any one of its reversal terminations (15) is entirely or partially enveloped by a withdrawal ring (23), the inside of the latter being connected to the inside of the outer coaxial duct (14) by at least one radial withdrawal orifice (24), the mixture withdrawal duct (11) being connected to the mixing enclosure (5) by means of said ring (23) and said orifice (24).

10. Heat engine comprising a forced recirculation mixer according to claim 1, **characterised in that** the mixing enclosure (5) comprise heating or cooling means (25).

11. Heat engine comprising a forced recirculation mixer according to claim 1, **characterised in that** the turbine motor (28) is an electric motor (29) which comprises, on the one hand, a rotor (30) which is rotationally fixed to the mixing turbine (13) and which is enclosed in the mixing enclosure (5), and, on the other hand, a stator (31) which is placed outside said chamber (5), magnetic fields produced by said stator (31) being able to pass through the wall of the mixing enclosure (5) in order to rotate the rotor (30).

12. Heat engine comprising a forced recirculation mixer according to claim 1, **characterised in that** the means (10) for introducing liquid in controlled quantity consist of a piston liquid pump (32) which comprises a pump casing (42), said pump (32) also comprising at least one single or double-acting pump piston (33) which, under the action of a piston actuator (34) cooperating with movement control means (44), can move in translation in a pump cylinder (35) to form at least one pump chamber (36) of variable volume into which the vapourisable liquid (2) can be introduced via an intake valve (37), and from which said liquid (2) can be expelled towards the liquid injection nozzle (9) via a discharge valve (38).

13. Heat engine comprising a forced recirculation mixer according to claim 12, **characterised in that** the piston actuator (34) consists of a rotary electric actuator motor (39) secured to the pump casing (42), said motor (39) being able to rotate in either direction to drive in rotation driving transmission means (40) which are secured in translation to the pump casing (42) and which cooperate with driven transmission means (41) which are secured in translation to the pump piston (33), said driving transmission means (40) reacting with said casing (42) to move said driven transmission means (41) in longitudinal translation.

14. Heat engine comprising a forced recirculation mixer according to claim 13, **characterised in that** the driving transmission means (40) are formed of a worm (47) which drives in rotation a worm wheel (43) which has a wheel thread (56), while the driven transmission means (41) consist of a piston thread (57) which cooperates with the wheel thread (56).

15. Heat engine comprising a forced recirculation mixer according to claim 1, **characterised in that** a gas mass flow meter (46) measures, directly or indirectly, the mass flow rate of the gas to be mixed (3) which flows in the gas inlet duct(7) and/or the mass flow rate of the homogeneous gas mixture (4) which flows in the mixture withdrawal duct (11).

16. Heat engine comprising a forced recirculation mixer according to claim 1, **characterised in that** the means (10) for introducing liquid in controlled are constituted of an impulse pump (63) which comprises a single or double-acting impulse pump piston (64) which, under the action of a pump solenoid actuator (65), can move in translation in an impulse pump cylinder (67) with which it forms at least one impulse pump chamber (68) of variable volume in which the vapourisable liquid (2) can be introduced via an impulse pump intake valve (69), and from which said liquid (2) can be expelled towards the liquid injection nozzle (9) via an impulse pump discharge valve (70).

17. Heat engine comprising a forced recirculation mixer according to claim 1, **characterised in that** the volume and/or mass flow rate of vapourisable liquid (2) is returned to the computer (45) by a vapourisable liquid flow meter (71) placed upstream or downstream of the means (10) for introducing liquid in controlled quantity.

18. Heat engine comprising a forced recirculation mixer according to claim 17, **characterized in that** the vapourisable liquid flowmeter (71) consists of a flowmeter piston (72) which can move in a sealed manner in a flowmeter cylinder (73) so as to form, on the one hand, an upstream flowmeter chamber (75) which is directly or indirectly connected to a pressure source (77), and, on the other hand, a downstream flowmeter chamber (76) which is directly or indirectly connected to the liquid injection nozzle (9), the position of said piston (72) in said cylinder (73) being transmitted to the computer (45) by a position sensor (74), while a flowmeter piston return spring (78) tends to push back the flowmeter piston (72) towards the upstream flowmeter chamber (75).

19. Heat engine comprising a forced recirculation mixer according to claim 18, **characterised in that** the upstream flowmeter chamber (75) can be connected to the downstream flowmeter chamber (76) by a flowmeter piston return valve (72).

20. Heat engine comprising a forced recirculation mixer according to claim 19, **characterised in that** the flowmeter piston return valve (72) comprises a steerable sealing plate (85) which can be kept pressed against a valve orifice (86) by a valve solenoid actuator (88).

21. Heat engine comprising a forced recirculation mixer according to claim 1, **characterised in that** a nozzle accumulator (80) is interposed between the means (10) for introducing liquid in controlled quantity and the liquid injection nozzle (9).

22. Heat engine comprising a forced recirculation mixer according to claim 21, **characterised in that** the nozzle accumulator (80) comprises a nozzle accumulator piston (81) which forms, with an accumulator cylinder (82), an accumulator chamber (83), said piston (81) being pushed in the direction of said chamber (83) by an accumulator spring (84) while the liquid injection nozzle (9) is secured to said piston (81) and passes through the latter from one side to the other in the lengthwise direction.
